# EUROPEAN PATENT APPLICATION

(11) **EP 3 428 238 A1**
(43) Date of publication of application: **16.01.2019**
(21) Application number: 17763194.2
(22) Date of filing: 06.03.2017
(51) Int. Cl.: C09D 11/03, C09B 69/10, C09D 11/32, D06P 5/00, C09B 11/00, C09B 11/28, C09B 57/02

(54) **INK, TEXTILE PRINTING METHOD, PRINTED TEXTILE, INK AGENT FOR TEXTILE**

(30) Priority: 09.03.2016 JP 2016045851
(71) Applicant: JSR Corporation, Minato-ku Tokyo 105-8640 (JP)
(72) Inventor: YONEDA Eiji, Tokyo 105-8640 (JP); KAWAI Hiroshi, Tokyo 105-8640 (JP); TSUKIMAWASHI Keisuke, Tokyo 105-8640 (JP); WAKAMORI Masahumi, Tokyo 105-8640 (JP); AZECHI Motohisa, Tokyo 105-8640 (JP)
(74) Representative: TBK
(86) International application number: PCT/JP2017/008855
(87) International publication number: WO 2017/154854

(57) **Abstract**

The present invention provides: an ink that enables easy ink-jet textile printing and is superior in coloring properties and laundering fastness after the textile printing; a textile printing method in which the ink is employed; a printed textile obtained by the textile printing method; and an ink agent for textile used for the ink. The ink contains: an ink agent containing a polymer (A) having a chromophore; and a binder resin. The ink preferably further contains water, an antiseptic agent, and a hydrotropic agent. The polymer is preferably in a particulate form. The textile printing method includes discharging droplets of the ink to attach the droplets onto a woven fabric and heating the woven fabric obtained after the discharging. The printed textile of the present invention is obtained by the aforementioned textile printing method. The ink agent for textile of the present invention contains a polymer having a chromophore.

## Description

### [TECHNICAL FIELD]

The present invention relates to an ink, a textile printing method, a printed textile, and an ink agent for textile.

### [BACKGROUND ART]

Ink-jet textile printing is a process of dyeing woven fabrics through discharging droplets of an ink by using an ink-jet printer onto various types of woven fabrics (textiles) having been subjected to a pretreatment beforehand.

An ink for textile usable for the ink-jet textile printing contains as coloring components a dye which is a water soluble compound, as well as a pigment which is insoluble particles, and the like. In a case of carrying out the ink-jet textile printing by using an ink for textile comprising a dye, discharge of droplets of the ink for textile onto a woven fabric is typically followed by removal of the dye not having been penetrated the woven fabric through a washing process such as a vapor process, a water washing process and a soaping process, for inhibiting color fading. However, thus printed woven fabrics tend to gradually fade in color, due to the dye seeping into water during repeated laundering.

In the case of carrying out the ink-jet textile printing by using an ink for textile containing a pigment, the printed textile is superior in inhibitory property of color fading during laundering (hereinafter, may be also referred to as "laundering fastness") even without carrying out the washing process following the textile printing. However, a particle of a pigment has a large diameter, and a surface thereof mainly contributes to coloring properties while an inner part thereof does not largely contribute to the coloring properties. Consequently, the coloring efficiency per unit volume of a pigment tends to be low. Accordingly, the ink for textile containing a pigment does not have sufficient coloring properties after printing.

In order to address the aforementioned problems, a method is proposed in which droplets of an ink for textile containing a dye and a compound such as urea are discharged onto a woven fabric, and then microwave irradiation is carried out (see Japanese Unexamined Patent Application, Publication No. 2010-84289).

### [PRIOR ART DOCUMENTS]

### Patent Documents

Patent Document 1: Japanese Unexamined Patent Application, Publication No. 2010-84289

### [SUMMARY OF THE INVENTION]

### [PROBLEMS TO BE SOLVED BY THE INVENTION]

However, such an ink-jet textile printing method requires additional equipment such as a microwave irradiation apparatus, and is therefore not necessarily easily adoptable. The present invention was made in view of the foregoing circumstances, and an object of the present invention is to provide: an ink that enables easy ink-jet textile printing and is superior in coloring properties and laundering fastness after the textile printing; a textile printing method in which the ink is employed; a printed textile obtained by the textile printing method; and an ink agent for textile for use in the ink.

### [MEANS FOR SOLVING THE PROBLEMS]

According to an aspect of the invention made for solving the aforementioned problems, an ink includes: an ink agent containing a polymer (may be also referred to as " (A) polymer" or "polymer (A)") having a chromophore; and a binder resin.

According to another aspect of the invention made for solving the aforementioned problems, a textile printing method includes a step of discharging droplets of the ink of the aspect of the invention to attach the droplets onto a woven fabric and a step of heating the woven fabric obtained after the discharging step.

According to yet another aspect of the invention made for solving the aforementioned problems, a printed textile is obtained by the textile printing method of the another aspect of the invention.

According to still another aspect of the invention made for solving the aforementioned problems, an ink agent contains a polymer having a chromophore.

The term "chromophore" as referred to herein means an atomic group that develops a color through absorption of light in a range from the visible light to the infrared light.

### [EFFECTS OF THE INVENTION]

The ink according to the aspect of the present invention allows easy ink-jet textile printing and is superior in coloring properties and laundering fastness after the textile printing. In particular, the ink can be suitably used for the ink-jet textile printing. The textile printing method and the printed textile according to other aspects of the present invention are able to easily provide a printed textile that is superior in the coloring properties and the laundering fastness. The ink agent for textile according to another embodiment of the present invention can be suitably used as a coloring component of the aforementioned ink.

### [DESCRIPTION OF EMBODIMENTS]

### Ink

The embodiments of present invention will be described in detail hereinafter. The ink of the present embodiment comprises: an ink agent containing (A) a polymer (may be also referred to as "polymer (A)") having a chromophore; and a binder resin. The ink can be suitably used for textile, in particular for the ink-jet textile printing. Use of the ink for textile will be mainly described hereinafter.

Due to comprising the ink agent containing the polymer (A) having the chromophore, the ink of the present embodiment enables easy ink-jet textile printing and is superior in the coloring properties and the laundering fastness after the printing. Although not necessarily clarified and without wishing to be bound by any theory, the reason for the ink of the present embodiment achieving the effects described above is inferred as in the following, for example. Due to comprising the ink agent containing the polymer (A), which is a water insoluble coloring component, the ink is able to achieve the superior laundering fastness even without carrying out the washing process for the textile printing. The polymer (A) contained in the ink agent for textile of the present embodiment can have a comparatively increased surface area per unit volume by easily and reliably reducing the size thereof to an appropriate degree. Accordingly, the ink of the present embodiment is capable of achieving the coloring properties as superior as an ink for textile comprising a dye.

### Ink Agent for Textile

The ink agent for textile contains the polymer (A) having the chromophore. The ink agent for textile typically contains only the polymer (A). The ink agent for textile can be suitably used as a coloring component of the aforementioned ink of the present embodiment.

### (A) Polymer

The polymer (A) has the chromophore. The polymer (A) is preferably in a particulate form (hereinafter, the polymer (A) in a particulate form having a particle size of no less than 10 nm may be also referred to as "(A) polymer particle" or "polymer particle (A)"). Due to being in a particulate form, the polymer (A) enables inhibition of seeping (disengagement) of the chromophore into a liquid medium, and in turn a further improvement of the laundering fastness of the ink of the present embodiment. Although not necessarily clarified and without wishing to be bound by any theory, the reason for achieving the effects described above due to the ink of the present embodiment having the aforementioned constitution is inferred as in the following, for example. Without wishing to be bound by any theory, the chromophore included in the polymer particle (A) would be covered by a part, which may be an outer shell, formed from a component other than the chromophore and thus separated from the liquid medium, resulting in achievement of the aforementioned effect of improving the laundering fastness.

The shape of the polymer particle (A) is not particularly limited, but a spherical shape is preferred. Due to the polymer particle (A) being spherical, inhibition of diffuse reflection on the particle surface, and in turn a further improvement of the coloring properties after the textile printing are enabled. However, not all of the polymer particles (A) are required to be spherical, and for example, the polymer particles (A) may also partially include a double-spherical particle that is formed through bonding of two spherical particles, and a non-spherical particle that is formed through missing of a part of a spherical particle. The lower limit of a proportion of the number of the spherical particles with respect to the total number of the polymer particles (A) is preferably 30%, more preferably 50%, and still more preferably 70%. The term "spherical" as referred to herein designates a concept encompassing perfectly spherical and substantially spherical, and specifically means that a ratio of a longitudinal diameter to a shortest diameter of a particle is no less than 1.0 and no greater than 2.0. The shape of the polymer particle (A) may be observed by using a transmission electron microscope. In addition, the term "proportion of the number of the spherical particles with respect to the total number of the polymer particles" as referred to herein means a percentage indicating the number of the spherical particles among 100 particles being present in a viewing angle of the transmission electron microscope.

In the case in which the polymer particles (A) include the spherical particles, an average of the ratio of a longitudinal diameter to a shortest diameter of the spherical particles is preferably no less than 1.0 and no greater than 1.5, and more preferably no less than 1.0 and no greater than 1.2. The term "average of the ratio of a longitudinal diameter to a shortest diameter of the spherical particles" as referred to herein means an average of a ratio of a longitudinal diameter to a shortest diameter of each spherical particle obtained by an observation of 100 spherical particles by using the transmission electron microscope.

The lower limit of an average particle diameter of the polymer particles (A) is, as described above, 10 nm, preferably 25 nm, more preferably 40 nm, still more preferably 50 nm, particularly preferably 60 nm, and still particularly preferably 90 nm. Meanwhile, the upper limit of the average particle diameter of the polymer particles (A) is preferably 1,000 nm, more preferably 600 nm, still more preferably 500 nm, and particularly preferably 400 nm. When the average particle diameter of the polymer particles (A) falls within the above range, further improvements of the coloring properties and the laundering fastness of the ink of the present embodiment are enabled. When the average particle diameter of the polymer particles (A) is greater than the lower limit, the polymer particles (A) are less soluble in water and consequently the laundering fastness of the ink is more likely to be sufficient. Meanwhile, when the average particle diameter of the polymer particles (A) does not exceed the upper limit, the surface area per unit volume of the polymer particles (A) is increased, and consequently the coloring properties of the ink of the present embodiment are more likely to be improved. The term "average particle diameter" as referred to herein means a value of a particle diameter at 50% cumulative volume from the smallest particle (D50), calculated based on measurement results of a particle size distribution of particles by using a particle size distribution analyzer employing a light scattering method as a principle of the measurement.

The polymer (A) is preferably an emulsion polymer obtained through emulsion polymerization. Due to the polymer (A) being an emulsion polymer, easy control of the shape and the average diameter of the particles of the polymer (A), and in turn further improvements of the coloring properties and the laundering fastness are enabled.

The polymer (A) preferably includes a structural unit (I) derived from a monomer having the chromophore. The polymer (A) may further include a second structural unit (hereinafter, may be also referred to as "structural unit (II)") having no chromophore.

### Structural Unit (I)

The structural unit (I) is derived from the monomer having the chromophore. The monomer having the chromophore is exemplified by:
i) a salt of a cationic chromophore with an anion having an anionic group and a polymerizable unsaturated group (hereinafter, may be also referred to as "compound (a1)");
ii) a salt of an anionic chromophore with a cation having a cationic group and a polymerizable unsaturated group (hereinafter, may be also referred to as "compound (a2)");
iii) a compound having an electrically neutral chromophore and a polymerizable unsaturated group (hereinafter, may be also referred to as "compound (a3)");
iv) a salt of a cationic chromophore having a polymerizable unsaturated group, with an anion; v) a salt of an anionic chromophore having a polymerizable unsaturated group, with a cation; and the like. Of these, in light of the laundering fastness, the compound (a1), the compound (a2), the compound (a3), and a combination thereof are preferred.

The term "cationic chromophore" as referred to herein means a positively charged atomic group. It is to be noted that, an atomic group having a positively charged functional group and a negatively charged functional group is considered a cationic chromophore when a sum of the charge thereof is positive as a whole. The term "anionic chromophore" as referred to herein means a negatively charged atomic group. It is to be noted that an atomic group having a positively charged functional group and a negatively charged functional group is categorized as an anionic chromophore when a sum of the charge thereof is negative as a whole. Furthermore, as used herein, an atomic group that does not fall under any of the definitions of the cationic chromophore and the anionic chromophore is referred to as "electrically neutral chromophore" when the atomic group does not have any of the positively charged functional group and the negatively charged functional group, or when the atomic group has the positively charged functional group and the negatively charged functional group being present in the same number, and is electrically neutral as a whole.

### Compound (a1)

The compound (a1) is a salt of a cationic chromophore with an anion having an anionic group and a polymerizable unsaturated group. The cationic chromophore constitutes the cation of the compound (a1).

Examples of the cationic chromophore include a triarylmethane chromophore, a polymethine chromophore, an azo chromophore, a diarylmethane chromophore, a quinonimine chromophore, an anthraquinone chromophore, a phthalocyanine chromophore, a xanthene chromophore, a squarylium chromophore, a quinophtharone chromophore, a coumarin chromophore, and the like. Of these cationic chromophores, in light of availability of source materials, the triarylmethane chromophore, the polymethine chromophore, the azo chromophore, and the xanthene chromophore are preferred. It is to be noted that as the cationic chromophore, any of dye cations classified as "C.I. Basic" in the Colour Index (C.I.; published by The Society of Dyers and Colourists) may be used.

As the cationic chromophore, an atomic group having an absorption maximum at no less than 360 nm and no greater than 830 nm is preferred, and an atomic group having an absorption maximum at no less than 380 nm and no greater than 780 nm is more preferred.

As the triarylmethane chromophore, a chromophore represented by the following formula (1) is preferred. It is to be noted that the triarylmethane chromophore represented by the following formula (1) may have various types of resonance structures; however, as referred to herein, these resonance structures are deemed to be identical to that represented in the following formula (1).

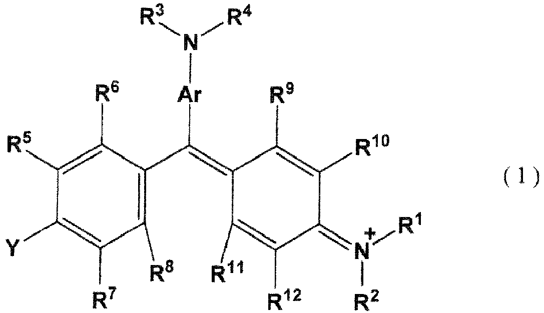

In the above formula (1),
Ar represents a substituted or unsubstituted divalent aromatic hydrocarbon group;
R¹ to R⁴ each independently represent a hydrogen atom, an alkyl group having 1 to 8 carbon atoms, a cycloalkyl group having 3 to 8 carbon atoms, or an aryl group;
R⁵ to R¹² each independently represent a hydrogen atom, a halogen atom, an alkyl group having 1 to 8 carbon atoms, or -COOR^{a}, wherein R^{a} represents a hydrogen atom or an alkyl group having 1 to 8 carbon atoms; and
Y represents a hydrogen atom or a monovalent group represented by the following formula (2). 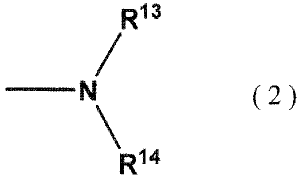 in the above formula (2), R¹³ and R¹⁴ each independently represent a hydrogen atom, an alkyl group having 1 to 8 carbon atoms, a cycloalkyl group having 3 to 8 carbon atoms, or an aryl group having 3 to 8 carbon atoms.

The divalent aromatic hydrocarbon group represented by Ar may have either a monocyclic aromatic hydrocarbon ring or a polycyclic aromatic hydrocarbon ring. The number of carbon atoms in the divalent aromatic hydrocarbon group is preferably 6 to 20, and more preferably 6 to 10. Specific examples of the divalent aromatic hydrocarbon group include a phenylene group, a naphthylene group, a biphenylene group, an anthrylene group and the like.

As a substituent for the divalent aromatic hydrocarbon group, an alkyl group having 1 to 6 carbon atoms is preferred. The alkyl group may be either linear or branched. Specific examples of the alkyl group include a methyl group, an ethyl group, an isopropyl group, a propyl group, a n-butyl group, a sec-butyl group, a t-butyl group, a pentyl group, a hexyl group and the like.

As the divalent aromatic hydrocarbon group represented by Ar, a phenylene group, a naphthylene group, a phenylene group substituted with an alkyl group having 1 to 6 carbon atoms, and a naphthylene group substituted with an alkyl group having 1 to 6 carbon atoms are preferred.

The alkyl group having 1 to 8 carbon atoms which may be represented by each of R¹ to R¹⁴ (including R^{a} of -COOR^{a} which may be represented by each of R⁵ to R¹²) may be either linear or branched. Specific examples of the alkyl group include groups similar to those described above, as well as a heptyl group, an octyl group and the like.

Specific examples of the cycloalkyl group having 3 to 8 carbon atoms which may be represented by each of R¹ to R⁴, R¹³ and R¹⁴ include a cyclopropyl group, a cyclobutyl group, a cyclopentyl group, a cyclohexyl group, a cycloheptyl group, a cyclooctyl group and the like.

The number of carbon atoms in the aryl group which may be represented by each of R¹ to R⁴, R¹³ and R¹⁴ may be, for example, 6 to 20. Specific examples of the aryl group include a phenyl group, a tolyl group, a naphthyl group and the like. Of these, a phenyl group is preferred.

Specific examples of the halogen atom which may be represented by each of R⁵ to R¹² include a fluorine atom, a chlorine atom, and a bromine atom, an iodine atom, and the like. Of these, a fluorine atom and a chlorine atom are preferred.

As the triarylmethane chromophore represented by the above formula (1), a chromophore represented by the following formula (1-1) or (1-2) is preferred in light of heat resistance and solvent resistance.

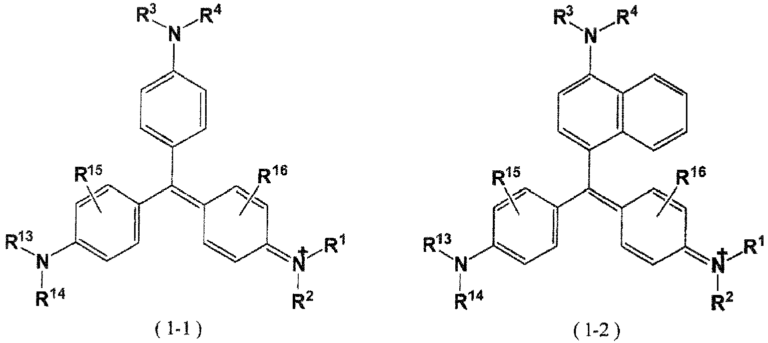

In the above formulae (1-1) and (1-2),
R¹⁵ and R¹⁶ each independently represent a hydrogen atom, a halogen atom, or an alkyl group having 1 to 8 carbon atoms; and
R¹ to R⁴, R¹³ and R¹⁴ are as defined for R¹ to R⁴, R¹³ and R¹⁴ in the above formulae (1) and (2).

As R¹, R², R¹³ and R¹⁴, an alkyl group having 1 to 6 carbon atoms is preferred. As R³, an alkyl group having 1 to 6 carbon atoms, a cycloalkyl group having 3 to 6 carbon atoms, and a phenyl group having 3 to 6 carbon atoms are preferred. As R⁴, a hydrogen atom and an alkyl group having 1 to 6 carbon atoms are preferred. As R¹⁵ and R¹⁶, a hydrogen atom, a halogen atom, and an alkyl group having 1 to 6 carbon atoms are preferred.

Examples of the triarylmethane chromophore represented by the above formula (1) include compounds represented by the following formulae, and the like.

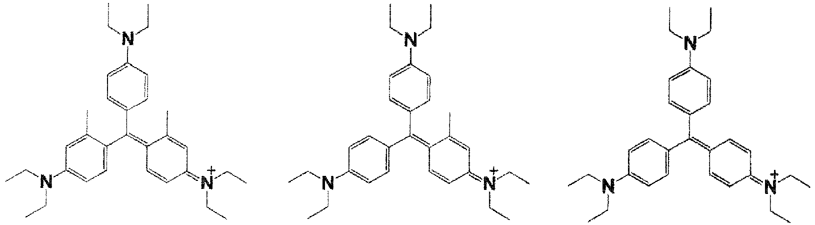

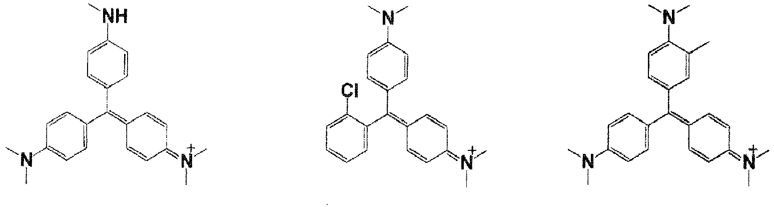

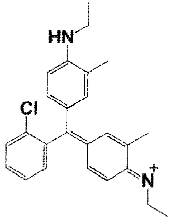

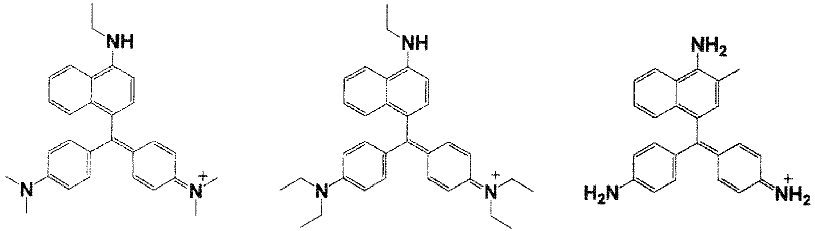

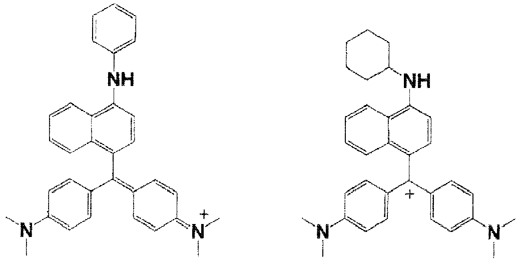

As the polymethine chromophore, a chromophore represented by the following formula (3) is preferred.

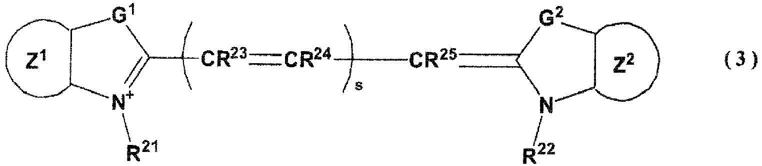

In the above formula (3),
R²¹ and R²² each independently represent a substituted or unsubstituted monovalent hydrocarbon group;
R²³ to R²⁵ each independently represent a hydrogen atom, a halogen atom, or a substituted or unsubstituted monovalent hydrocarbon group;
the ring Z¹ and the ring Z² each independently represent a substituted or unsubstituted aromatic hydrocarbon ring;
G¹ and G² each independently represent -O-, -S-, or -CR²⁶R²⁷-, wherein R²⁶ and R²⁷ each independently represent a substituted or unsubstituted monovalent hydrocarbon group; and
s is an integer of 1 to 3,
wherein in a case where s is no less than 2, a plurality of R²³s and R²⁴s may be identical or different.

The monovalent hydrocarbon group represented by each of R²¹ to R²⁷ is exemplified by a monovalent aliphatic hydrocarbon group, a monovalent alicyclic hydrocarbon group, a monovalent aromatic hydrocarbon group, and the like.

The monovalent aliphatic hydrocarbon group may be either linear or branched, and may be either a monovalent saturated hydrocarbon group or a monovalent unsaturated hydrocarbon group. The monovalent aliphatic hydrocarbon group is exemplified by an alkyl group, an alkenyl group, an alkynyl group and the like. The number of carbon atoms in the monovalent aliphatic hydrocarbon group is preferably 1 to 30, more preferably 1 to 15, and still more preferably 1 to 8. Specific examples of the alkyl group include groups similar to those described above, as well as a nonyl group, a decyl group, an undecyl group, a 1-methyldecyl group, a dodecyl group, a 1-methylundecyl group, a 1-ethyldecyl group, a tridecyl group, a tetradecyl group, a tert-dodecyl group, a pentadecyl group, a 1-heptyloctyl group, a hexadecyl group, an octadecyl group, and the like. Specific examples of the alkenyl group include an ethenyl group, a 1-propenyl group, a 1-butenyl group, a 1-pentenyl group, a 1-hexenyl group, a 2-ethyl-2-butenyl group, a 2-octenyl group, a (4-ethenyl)-5-hexenyl group, a 2-decenyl group, and the like. Specific examples of the alkynyl group include an ethynyl group, a 1-propynyl group, a 1-butynyl group, a 1-pentynyl group, a 3-pentynyl group, a 1-hexynyl group, a 2-ethyl-2-butynyl group, a 2-octynyl group, a (4-ethynyl)-5-hexynyl group, a 2-decynyl group, and the like.

The monovalent alicyclic hydrocarbon group may be either saturated or unsaturated. The number of carbon atoms in the monovalent alicyclic hydrocarbon group is preferably 3 to 30, and more preferably 3 to 12. The monovalent alicyclic hydrocarbon group is exemplified by a cycloalkyl group, a cycloalkenyl group, a monovalent condensed polycyclic hydrocarbon group, a monovalent bridged cyclic hydrocarbon group, a monovalent spiro hydrocarbon group, a monovalent cyclic terpene hydrocarbon group, and the like. Specific examples of the cycloalkyl group include groups similar to those described above, and the like. Specific examples of the cycloalkenyl group include a 1-cyclohexenyl group and the like. Specific examples of the condensed polycyclic hydrocarbon group include a tricyclodecanyl group, a decahydro-2-naphthyl group, an adamantyl group and the like. Specific examples of the monovalent bridged cyclic hydrocarbon group include a tricyclo[5.[2][1]0^{2,6}]decan-8-yl group, a pentacyclopentadecanyl group, an isobornyl group, a dicyclopentenyl group, a tricyclopentenyl group and the like. Specific examples of the monovalent spiro hydrocarbon group include a monovalent group obtained by removing a hydrogen atom from spiro[3,4]heptane or spiro[3,4]octane, and the like. Specific examples of the monovalent cyclic terpene hydrocarbon group include a monovalent group obtained by removing a hydrogen atom from p-menthane, thujane, carane, etc., and the like.

The monovalent aromatic hydrocarbon group may have either a monocyclic aromatic hydrocarbon ring or a polycyclic aromatic hydrocarbon ring. The number of carbon atoms in the monovalent aromatic hydrocarbon group is preferably 6 to 20, and more preferably 6 to 10. Examples of the monovalent aromatic hydrocarbon group include a phenylene group, a naphthylene group, a biphenylene group, an anthrylene group and the like. Of these, a phenyl group and a naphthyl group are preferred.

A substituent for the monovalent hydrocarbon group is exemplified by a halogen atom, a hydroxy group, an alkoxy group having 1 to 6 carbon atoms, and the like. It is to be noted that, in the case of the monovalent hydrocarbon group being an alicyclic hydrocarbon group or an aromatic hydrocarbon group, an alkyl group having 1 to 6 carbon atoms may be included as a substituent. Specific examples of the alkoxy group having 1 to 6 carbon atoms include a methoxy group, an ethoxy group, a n-propoxy group, an isopropoxy group, a n-butoxy group, a tert-butoxy group, a sec-butoxy group, a n-pentyloxy group, an iso-pentyloxy group, a n-hexyloxy group, a methoxymethoxy group, an ethoxyethoxy group, a 3-(iso-propyloxy)propyloxy group, and the like.

Specific examples of the halogen atom which may be represented by each of R²³ to R²⁵, and the halogen atom which may be included in the hydrocarbon group include halogen atoms similar to those described above, and the like.

The aromatic hydrocarbon ring represented by the ring Z¹ or the ring Z² may be either a monocyclic aromatic hydrocarbon ring or a polycyclic aromatic hydrocarbon ring. The number of carbon atoms in the aromatic hydrocarbon ring is preferably 6 to 20, and more preferably 6 to 10. Specific examples of the aromatic hydrocarbon ring include a benzene ring, a biphenyl ring, a naphthalene ring, an azulene ring, an anthracene ring, a phenanthrene ring, a pyrene ring, a naphthacene ring, a triphenylene ring, and the like.

As the monovalent hydrocarbon group represented by R²¹ or R²², an alkyl group having 1 to 12 carbon atoms is preferred, an alkyl group having 1 to 8 carbon atoms is more preferred, and an alkyl group having 1 to 6 carbon atoms is still more preferred.

As each of R²³ to R²⁵, a hydrogen atom is preferred.

As each of the ring Z¹ and the ring Z², a benzene ring is preferred.

As each of G¹ and G², -O- and -CR²⁶R²⁷- are preferred. As each of R²⁶ and R²⁷, an alkyl group having 1 to 8 carbon atoms is preferred, an alkyl group having 1 to 4 carbon atoms is more preferred, and a methyl group and an ethyl group are still more preferred.

Preferably, s is 1 or 2, and more preferably 1.

Specific examples of the polymethine chromophore represented by the above formula (3) include those represented by the following formulae, and the like.

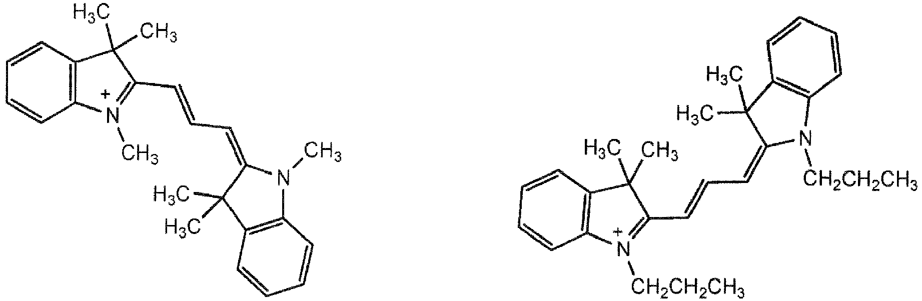

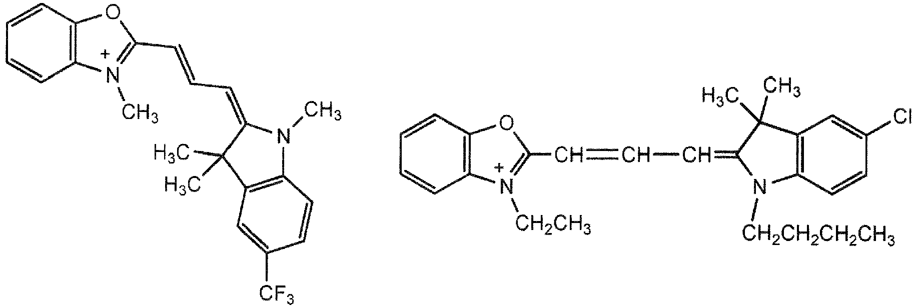

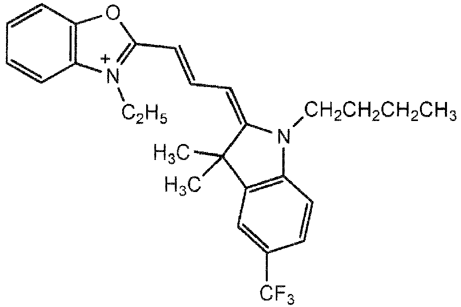

In addition to the chromophore represented by the above formula (3), examples of the polymethine chromophore which may be used include those represented by the following formulae, and the like.

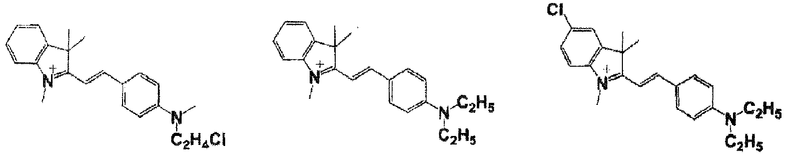

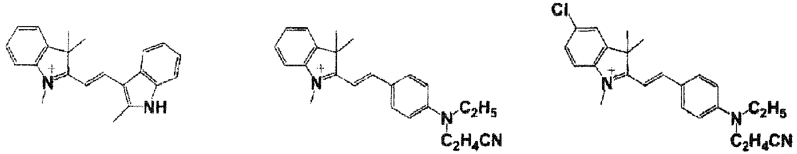

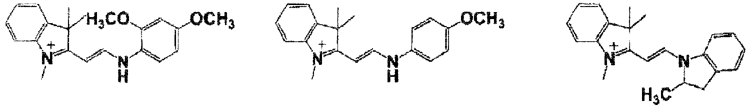

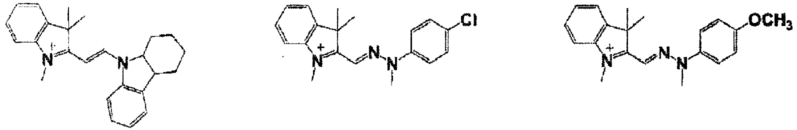

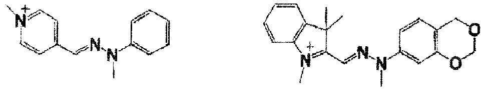

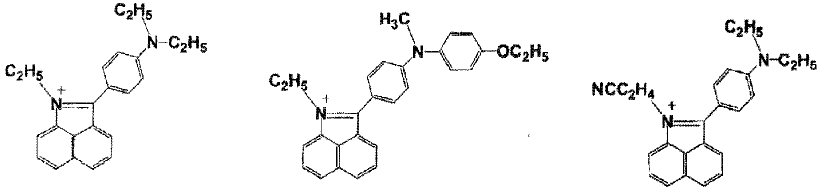

Examples of the azo chromophore which may be used include those represented by the following formulae, and the like.

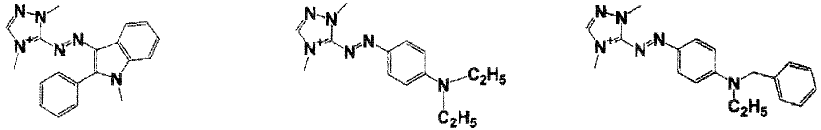

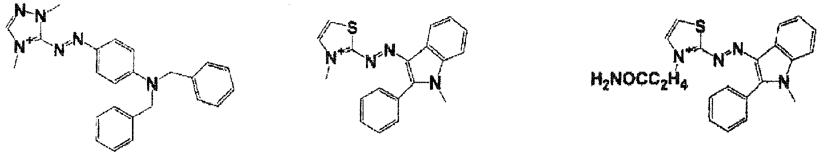

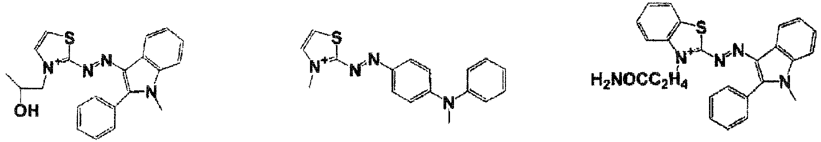

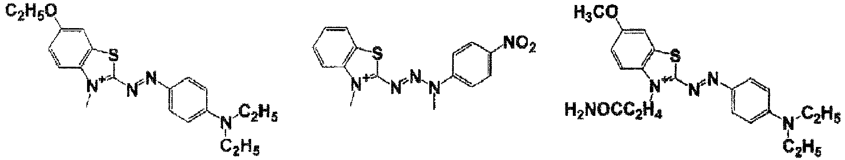

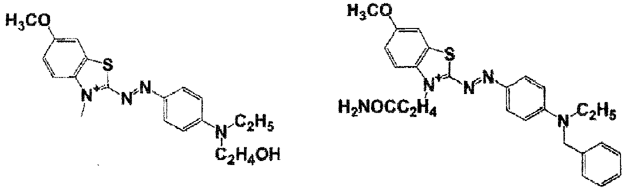

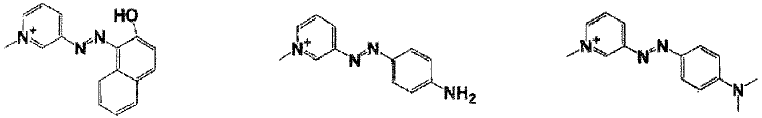

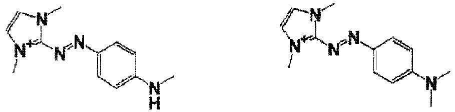

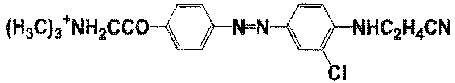

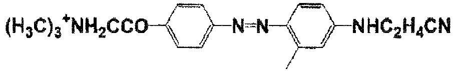

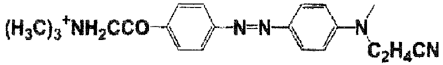

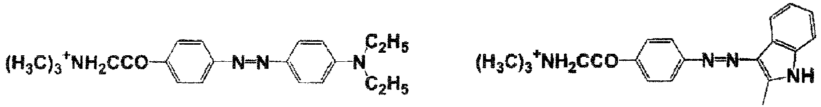

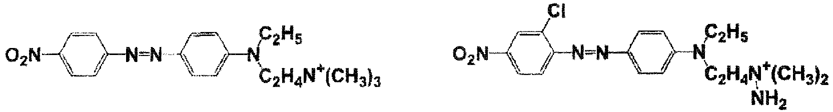

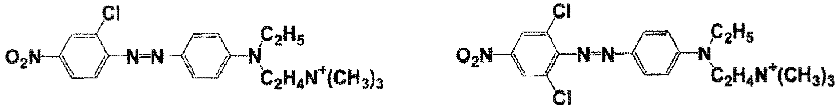

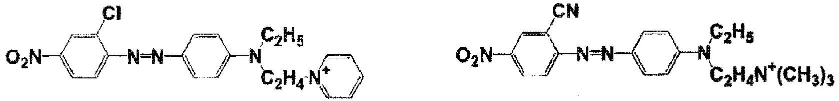

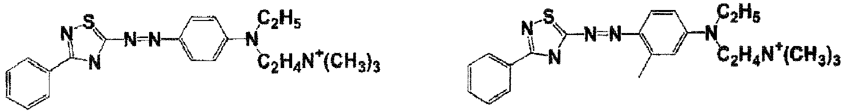

Examples of the diarylmethane chromophore which may be used include those represented by the following formulae, and the like.

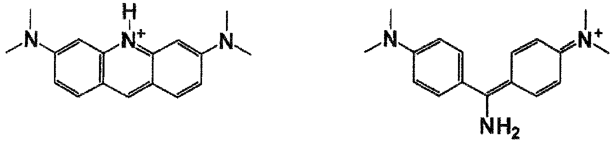

Examples of the quinonimine chromophore which may be used include those represented by the following formulae, and the like.

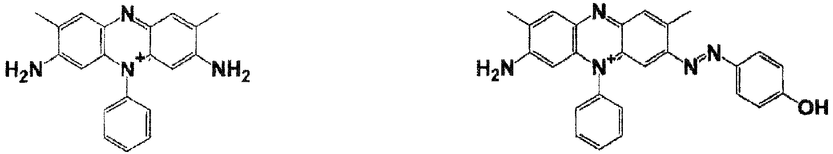

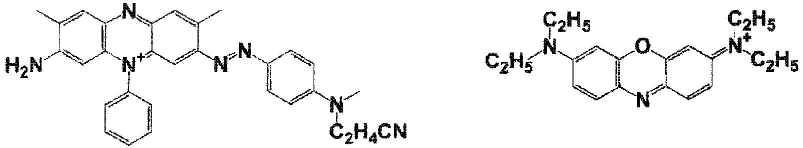

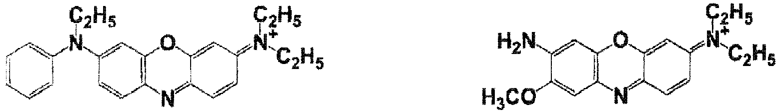

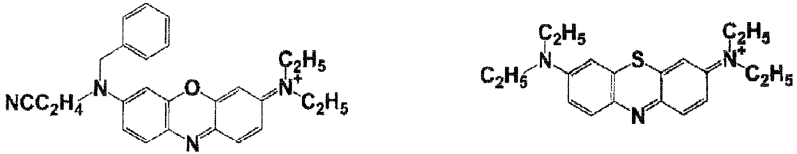

Examples of the anthraquinone chromophore which may be used include those represented by the following formulae, and the like.

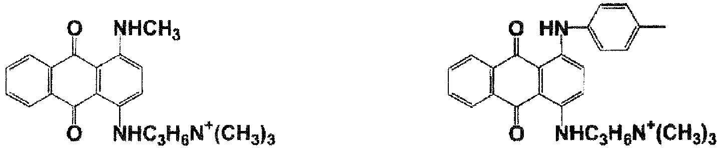

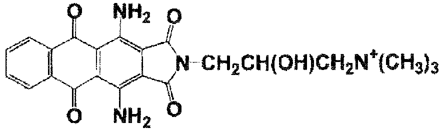

Examples of the phthalocyanine chromophore which may be used include those represented by the following formulae, and the like. It is to be noted that, in the following formulae, CuPC represents a copper phthalocyanine residue.

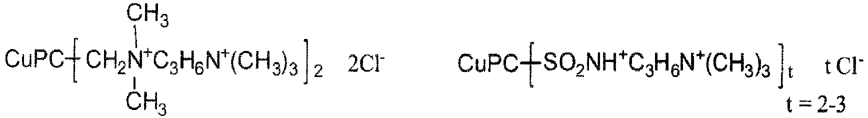

As the xanthene chromophore, a chromophore represented by the following formula (4) is preferred.

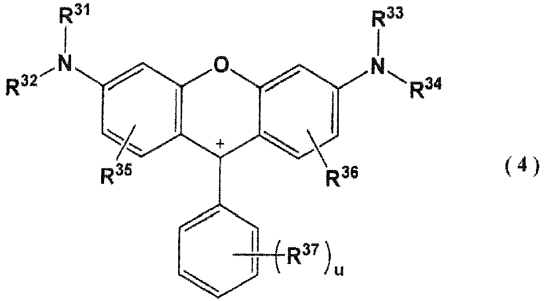

In the above formula (4),
R³¹, R³², R³³ and R³⁴ each independently represent a hydrogen atom, -R³⁸ or a monovalent aromatic hydrocarbon group having 6 to 10 carbon atoms, wherein the hydrogen atom included in the monovalent aromatic hydrocarbon group may be substituted with a halogen atom, -R³⁸, -OH, -OR³⁸, -SO₃H, -SO₃M¹, -COOH, -COOM¹, -COOR³⁸, -SO₃R³⁸, -SO₂NHR³⁹ or -SO₂NR³⁹R⁴⁰;
R³⁵ and R³⁶ each independently represent a hydrogen atom or an alkyl group having 1 to 8 carbon atoms;
R³⁷ represents -SO₃H, -SO₃M¹, -COOH, -COOR³⁸, -SO₃R³⁸, -SO₂NHR³⁹ or -SO₂NR³⁹R⁴⁰; and
u is an integer of 0 to 5, wherein in a case where u is no less than 2, a plurality of R³⁷s may be identical or different,
wherein, R³⁸ represents a monovalent saturated hydrocarbon group having 1 to 10 carbon atoms, wherein the hydrogen atom included in the monovalent saturated hydrocarbon group may be substituted with a halogen atom, and the monovalent saturated hydrocarbon group optionally comprises -O-, -CO- or -NR^{38A}- between two carbon atoms in a C-C bond, wherein R^{38A} represents a monovalent saturated hydrocarbon group having 1 to 10 carbon atoms;
R³⁹ and R⁴⁰ each independently represent an alkyl group having 1 to 10 carbon atoms, a cycloalkyl group having 3 to 30 carbon atoms or -X^{a}, or R³⁹ and R⁴⁰ taken together represent a substituted or unsubstituted monovalent heterocyclic group having 1 to 10 carbon atoms together with an atom or an atomic chain to which R³⁹ and R⁴⁰ bond, wherein the hydrogen atom included in the alkyl group and in the cycloalkyl group may be substituted with a hydroxy group, a halogen atom, -X^{a}, -CH=CH₂ or -CH=CHR³⁸, the alkyl group and the cycloalkyl group may include -O-, -CO- or -NR³⁸- between two carbon atoms in a C-C bond, and the hydrogen atom included in the monovalent heterocyclic group may be substituted with -R³⁸, -OH or -X^{a},
M¹ represents a sodium atom or a potassium atom, and
X^{a} represents a monovalent aromatic hydrocarbon group having 6 to 10 carbon atoms or a monovalent aromatic heterocyclic group having 5 to 10 carbon atoms, wherein the hydrogen atom included in the monovalent aromatic hydrocarbon group and in the monovalent aromatic heterocyclic group may be substituted with -OH, -R³⁸, -OR³⁸, -NO₂, -CH=CH₂, -CH=CHR³⁸ or a halogen atom.

As long as the number of carbon atoms is 1 to 10, the monovalent hydrocarbon group represented by R³⁸ may be linear, branched, or cyclic, and may have a bridged structure. Specific examples of the monovalent saturated hydrocarbon group include a monovalent saturated aliphatic hydrocarbon group, a monovalent saturated alicyclic hydrocarbon group, and the like. The monovalent saturated aliphatic hydrocarbon group is exemplified by an alkyl group and the like. The monovalent saturated alicyclic hydrocarbon group is exemplified by a cycloalkyl group and the like. Examples of the alkyl group and the cycloalkyl group include groups similar to those described above.

Examples of the monovalent heterocyclic group having 1 to 10 carbon atoms, which may be taken together represented by R³⁹ and R⁴⁰ together with an atom or an atomic chain to which R³⁹ and R⁴⁰ bond, include a pyrrolidinyl group, a pyrazolynyl group, a morpholinyl group, a thiomorpholinyl group, a piperidyl group, a piperidino group, a piperazinyl group, a homopiperazinyl group, a tetrahydropyrimidine group, a 1,3-dioxolan-2-yl group, a pyridyl group, a pyrazinyl group, a pyrimidyl group, a pyridazinyl group, a quinolyl group, an isoquinolyl group, a phthalazinyl group, a quinoxalinyl group, an imidazolyl group, an pyrazolyl group, a thiazolyl group, a tetrazolyl group, a thiazolyl group, a benzothiazolyl group, an oxazolyl group, an indolyl group, an indazolyl group, a benzoimidazolyl group, a phthalimide group, and the like. A substituent for the monovalent heterocyclic group is exemplified by a halogen atom, a hydroxy group, an alkoxy group having 1 to 6 carbon atoms, an amino group, an alkyl group having 1 to 6 carbon atoms, and the like.

Examples of the monovalent aromatic heterocyclic group having 5 to 10 carbon atoms which may be represented by X^{a} include a furyl group, a thienyl group, a pyridyl group, a pyrrolyl group, an oxazolyl group, an isoxazol group, a thiazolyl group, an isothiazolyl group, an imidazolyl group, a pyrazolyl group, a pyrimidyl group, and the like.

As the monovalent aromatic hydrocarbon group that may be represented by each of R³¹, R³², R³³, R³⁴ and X^{a}, an aryl group having 6 to 10 carbon atoms is preferred, and specific examples thereof include a phenyl group, a naphthyl group and the like.

Examples of -SO₃R³⁸ that may be represented by each of R³¹, R³², R³³, R³⁴ and R³⁷ include a methanesulfonyl group, an ethanesulfonyl group, a hexanesulfonyl group, a decanesulfonyl group, and the like.

Examples of -COOR³⁸ include a methyloxycarbonyl group, an ethyloxycarbonyl group, a propyloxycarbonyl group, an isopropyloxycarbonyl group, a butyloxycarbonyl group, a cyclohexyloxycarbonyl group, a methoxypropyloxycarbonyl group, and the like.

As each of R³⁹ and R⁴⁰ in -SO₂NHR³⁹ and -SO₂NR³⁹R⁴⁰, a branched alkyl group having 6 to 8 carbon atoms, a monovalent alicyclic hydrocarbon group having 5 to 7 carbon atoms, an aralkyl group having 8 to 10 carbon atoms, an alkyl group having 2 to 8 carbon atoms substituted with a hydroxy group or an alkoxy group, and an aryl group are preferred.

As the alkyl group having 1 to 8 carbon atoms which may be represented by R³⁵ or R³⁶, an alkyl group having 1 to 4 carbon atoms is preferred, and a methyl group and an ethyl group are more preferred.

Representative examples of the chromophore represented by the above formula (4) include those represented by the following formulae, and the like.

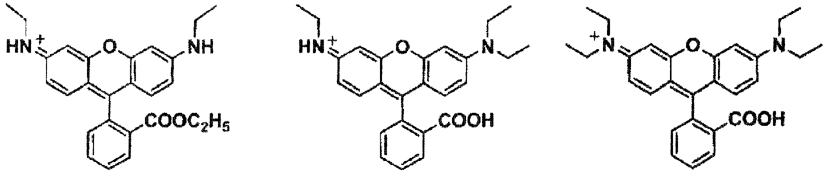

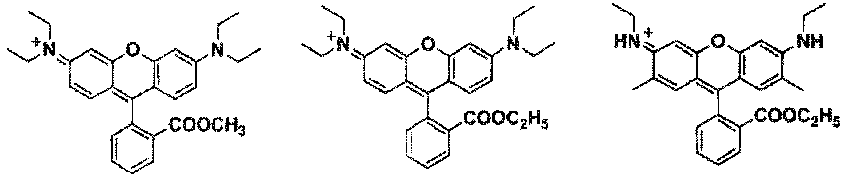

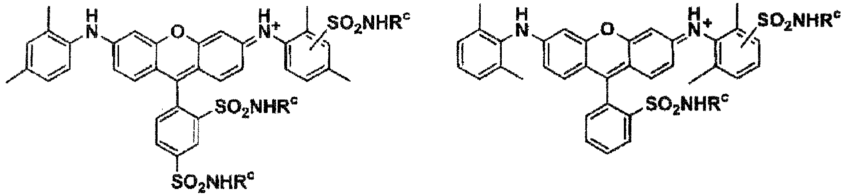

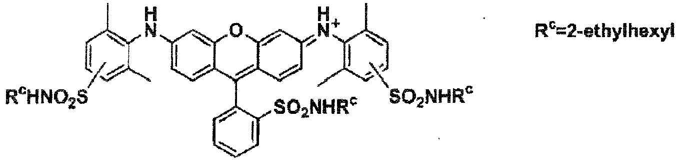

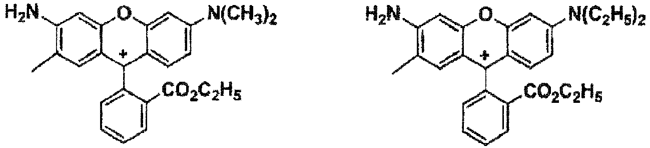

As the coumarin chromophore, a chromophore represented by the following formula (Y) is preferred.

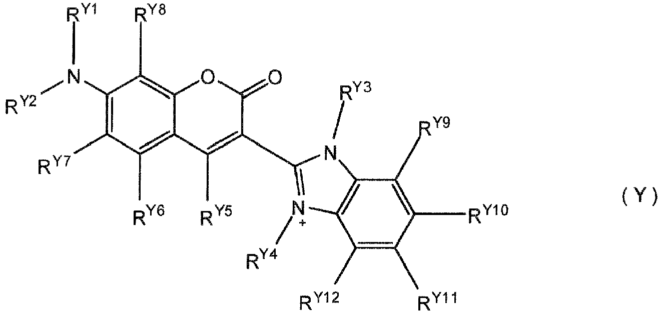

In the above formula (Y),
R^{Y1} to R^{Y4} each independently represent a hydrogen atom, an alkyl group having 1 to 8 carbon atoms, a cycloalkyl group having 3 to 8 carbon atoms, or an aryl group having 3 to 8 carbon atoms; and
R^{Y5} to R^{Y12} each independently represent a hydrogen atom, a halogen atom, an alkyl group having 1 to 8 carbon atoms, or -COOR^{Y}, wherein R^{Y} represents a hydrogen atom or an alkyl group having 1 to 8 carbon atoms.

The alkyl group having 1 to 8 carbon atoms which may be represented by each of R^{Y1} to R^{Y12} (including R^{Y} of -COOR^{Y} which may be represented by each of R^{Y5} to R^{Y12}) may be either linear or branched. Specific examples of the alkyl group include groups similar to those described above, as well as a heptyl group, an octyl group and the like.

Specific examples of the cycloalkyl group having 3 to 8 carbon atoms which may be represented by each of R^{Y1} to R^{Y4} include a cyclopropyl group, a cyclobutyl group, a cyclopentyl group, a cyclohexyl group, a cycloheptyl group, a cyclooctyl group and the like.

The number of carbon atoms in the aryl group which may be represented by each of R^{Y1} to R^{Y4} may be, for example, 6 to 20. Specific examples of the aryl group include a phenyl group, a tolyl group, a naphthyl group and the like. Of these, a phenyl group is preferred.

Specific examples of the halogen atom which may be represented by each of R^{Y5} to R^{Y12} include a fluorine atom, a chlorine atom, and a bromine atom, an iodine atom, and the like. Of these, a fluorine atom is preferred.

Examples of the coumarin chromophore represented by the above formula (Y) include compounds represented by the following formulae, and the like.

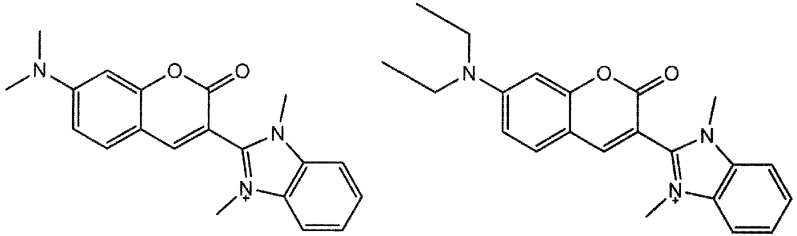

The anion of the compound (a1) includes an anionic group and a polymerizable unsaturated group. The anionic group is exemplified by -SO₃⁻, -CO-N⁻-CO-, -SO₂-N⁻-SO₂-, -COO⁻, and the like. As the anionic group, -CO-N⁻-CO and -SO₂-N⁻-SO₂- are preferred, and -SO₂-N⁻-SO₂ is more preferred.

Meanwhile, the polymerizable unsaturated group is exemplified by a (meth)acryloyloxy group, a vinylaryl group, a vinyloxy group, an aryl group, and the like. As the polymerizable unsaturated group, a (meth)acryloyloxy group and a vinylaryl group are preferred, and a vinylaryl group is more preferred.

As the anion of the compound (a1), an anion represented by the following formula (5) is preferred.

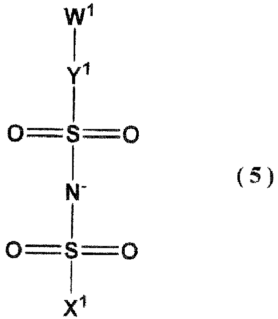

In the above formula (5),
W¹ represents a monovalent polymerizable unsaturated group;
X¹ represents a halogen atom, a monovalent halogenated hydrocarbon group, or a monovalent group having a linking group that includes between two adjacent carbon atoms in a monovalent halogenated hydrocarbon group, a hetero atom other than a halogen atom; and
Y¹ represents a single bond or a divalent organic group.

As the monovalent polymerizable unsaturated group represented by W¹, a (meth)acryloyloxy group and a vinylaryl group are preferred, and a vinylaryl group is more preferred.

The halogen atom that may be represented by X¹ is exemplified by halogen atoms similar to those described above, and the like.

The monovalent halogenated hydrocarbon group that may be represented by X¹ is exemplified by a group obtained by substituting with a halogen atom one or more hydrogen atom(s) included in a monovalent aliphatic hydrocarbon group, a monovalent alicyclic hydrocarbon group, a monovalent aliphatic hydrocarbon group having an alicyclic hydrocarbon group as a substituent (hereinafter referred to as "alicyclic hydrocarbon-substituted aliphatic hydrocarbon group"), a monovalent aromatic hydrocarbon group, a monovalent aromatic hydrocarbon group having an aliphatic hydrocarbon group as a substituent (hereinafter referred to as "aliphatic hydrocarbon-substituted aromatic hydrocarbon group"), a monovalent aliphatic hydrocarbon group having an aromatic hydrocarbon group as a substituent (hereinafter referred to as "aromatic hydrocarbon-substituted aliphatic hydrocarbon group"), or the like.

In the case in which the hydrocarbon group in the monovalent halogenated hydrocarbon group is the monovalent aliphatic hydrocarbon group, the monovalent alicyclic hydrocarbon group, the monovalent alicyclic hydrocarbon-substituted aliphatic hydrocarbon group, the monovalent aromatic hydrocarbon group, the monovalent aliphatic hydrocarbon-substituted aromatic hydrocarbon group, or the monovalent aromatic hydrocarbon-substituted aliphatic hydrocarbon group, preferred examples of these groups are as follows in light of solubility in the liquid medium.

As the monovalent aliphatic hydrocarbon group, an alkyl group is preferred. The alkyl group may be either linear or branched. The number of carbon atoms in the alkyl group is preferably 1 to 20, more preferably 1 to 8, and still more preferably 1 to 6. Specific examples of the alkyl group include groups similar to those described above, and the like.

The monovalent alicyclic hydrocarbon group may be a bicyclic to tetracyclic bridged alicyclic hydrocarbon group. The number of carbon atoms in the alicyclic hydrocarbon group is preferably 3 to 20, more preferably 3 to 12, and still more preferably 3 to 6. Specific examples of the monovalent alicyclic hydrocarbon group include groups similar to those described above, and the like.

As the monovalent alicyclic hydrocarbon-substituted aliphatic hydrocarbon group, an alicyclic saturated hydrocarbon-substituted alkyl group is preferred. The number of carbon atoms in the monovalent alicyclic hydrocarbon-substituted aliphatic hydrocarbon group is preferably 4 to 20, and more preferably 6 to 14. Specific examples of the monovalent alicyclic hydrocarbon-substituted aliphatic hydrocarbon group include a cyclopropylmethyl group, a cyclobutylmethyl group, a cyclohexylmethyl group, a cyclohexylpropyl group, an adamantylmethyl group, a 1-(1-adamantyl)ethyl group, a cyclopentylethyl group and the like.

The number of carbon atoms in the monovalent aromatic hydrocarbon group is preferably 6 to 14, and more preferably 6 to 10. Specific examples of the monovalent aromatic hydrocarbon group include groups similar to those described above, and the like. Of these, a phenyl group is preferred.

As the monovalent aliphatic hydrocarbon-substituted aromatic hydrocarbon group, an alkyl-substituted phenyl group is preferred. The number of carbon atoms in the monovalent aliphatic hydrocarbon-substituted aromatic hydrocarbon group is preferably 7 to 30, and more preferably 7 to 20. Specific examples of the monovalent aliphatic hydrocarbon-substituted aromatic hydrocarbon group include a tolyl group, a xylyl group, a mesityl group and the like.

As the monovalent aromatic hydrocarbon-substituted aliphatic hydrocarbon group, an aralkyl group is preferred. The number of carbon atoms in the monovalent aromatic hydrocarbon-substituted aliphatic hydrocarbon group is preferably 7 to 30, and more preferably 7 to 20. Specific examples of the monovalent aromatic hydrocarbon-substituted aliphatic hydrocarbon group include a benzyl group, a phenethyl group, and the like. Of these, a benzyl group is preferred.

As the hydrocarbon group in the monovalent halogenated hydrocarbon group that may be represented by X¹, the monovalent aliphatic hydrocarbon group, the monovalent alicyclic hydrocarbon-substituted aliphatic hydrocarbon group, the monovalent aromatic hydrocarbon group, the monovalent aliphatic hydrocarbon-substituted aromatic hydrocarbon group and the monovalent aromatic hydrocarbon-substituted aliphatic hydrocarbon group are preferred, the alkyl group, the alicyclic saturated hydrocarbon-substituted alkyl group, the phenyl group, the alkyl-substituted phenyl group and the aralkyl group are more preferred, and the alkyl group and the aralkyl group are particularly preferred.

Meanwhile, as the halogen atom in the monovalent halogenated hydrocarbon group that may be represented by X¹, a fluorine atom is preferred in light of heat resistance of the polymer (A). It is inferred that, when the halogen atom in the monovalent halogenated hydrocarbon group is a fluorine atom, a salt having a stronger ionic bond would be formed, resulting in an improvement of the heat resistance of the polymer (A).

The linking group in the monovalent group having a linking group that included a hetero atom other than a halogen atom, between two adjacent carbon atoms in a monovalent halogenated hydrocarbon group that may be represented by X¹ is exemplified by -O-, -S-, -CO-, -COO-, -CONH-, -SO₂ and the like. The monovalent halogenated hydrocarbon group constituting the monovalent group having the above-described linking group is exemplified by groups similar to those described above. It is to be noted that in the monovalent halogenated hydrocarbon group constituting the monovalent group having the above-described linking group, the "number of carbon atoms" as referred to means a total number of carbon atoms in the part other than a carbon atom constituting the linking group.

As X¹, in light of the heat resistance of the polymer (A), the monovalent halogenated hydrocarbon group and the monovalent group having a linking group that includes a hetero atom other than a halogen atom between two adjacent carbon atoms in a monovalent halogenated hydrocarbon group are preferred, a group represented by the following formula (6) or (7) is more preferred, and the group represented by the following formula (6) is still more preferred in light of formation of a conjugated base of an organic acid of higher acidity.

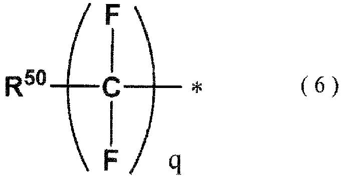

In the above formula (6),
R⁵⁰ represents a hydrogen atom, a fluorine atom, an alkyl group, a fluorinated alkyl group, a monovalent alicyclic hydrocarbon group, an alkoxy group, a fluorinated alkoxy group, R⁵¹COOR⁵²-, or R⁵³COOR⁵⁴CFH-, wherein
R⁵¹ and R⁵³ each independently represent an alkyl group, a monovalent alicyclic hydrocarbon group, a heteroaryl group, or a substituted or unsubstituted aryl group, and
R⁵² and R⁵⁴ each independently represent an alkanediyl group;
q is an integer of no less than 1, and
* denotes a binding site with -SO₂-N⁻-SO₂-Y¹-W¹ in the above formula (5).

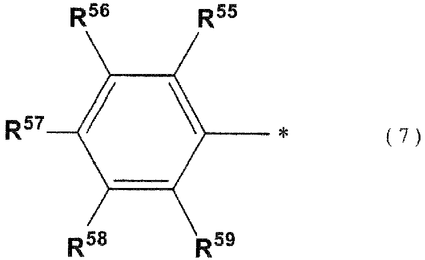

In the above formula (7),
R⁵⁵ to R⁵⁹ each independently represent a hydrogen atom, a fluorine atom, a hydroxy group, an alkyl group, a fluorinated alkyl group or an alkoxy group; and
* denotes a binding site to -SO₂-N⁻-SO₂-Y¹-W¹ in the above formula (5), wherein
at least one of R⁵⁵ to R⁵⁹ represents a fluorine atom or a fluorinated alkyl group.

In the above formula (6), an alkyl group that may be represented by R⁵⁰ may be either linear or branched. The number of carbon atoms in the alkyl group is preferably 1 to 20, more preferably 1 to 8, and still more preferably 1 to 4. Specific examples of the alkyl group include groups similar to those described above, and the like.

The fluorinated alkyl group that may be represented by R⁵⁰ may be either linear or branched. The number of carbon atoms in the fluorinated alkyl group is preferably 1 to 20, more preferably 1 to 8, and still more preferably 1 to 4. The fluorinated alkyl group is exemplified by groups obtained by substituting with a fluorine atom a part or all of hydrogen atoms in the above-mentioned alkyl groups. In particular, a perfluoroalkyl group is preferred.

The monovalent alicyclic hydrocarbon group that may be represented by R⁵⁰ may be a bicyclic to tetracyclic monovalent bridged alicyclic hydrocarbon group. The number of carbon atoms in the monovalent alicyclic hydrocarbon group is preferably 3 to 20, and more preferably 3 to 12. The monovalent alicyclic hydrocarbon group is exemplified by groups similar to those described above, and the like.

The alkoxy group that may be represented by R⁵⁰ may be either linear or branched. The number of carbon atoms in the alkoxy group is preferably 1 to 10, more preferably 1 to 8, and still more preferably 1 to 4. Specific examples of the alkoxy group include groups similar to those described above, and the like.

The fluorinated alkoxy group that may be represented by R⁵⁰ may be either linear or branched. The number of carbon atoms in the fluorinated alkoxy group is preferably 1 to 10, more preferably 1 to 6, and still more preferably 1 to 4. Specific examples of the fluorinated alkoxy group include groups obtained by substituting with a fluorine atom a part or all of hydrogen atoms in the above-mentioned alkoxy groups, and a perfluoroalkoxy group is preferred.

R⁵¹ and R⁵³ in R⁵¹COOR⁵²- and R⁵³COOR⁵⁴CFH- that may be represented by R⁵⁰, each independently represent an alkyl group, a monovalent alicyclic hydrocarbon group, a heteroaryl group, or a substituted or unsubstituted aryl group. The alkyl group may be either linear or branched. The number of carbon atoms in the alkyl group is preferably 1 to 12 and more preferably 1 to 8. Specific examples of the alkyl group include groups similar to those described above, and the like. The monovalent alicyclic hydrocarbon group may be a bicyclic to tetracyclic monovalent bridged alicyclic hydrocarbon group. The number of carbon atoms in the monovalent alicyclic hydrocarbon group is preferably 3 to 20, and more preferably 3 to 12. As the heteroaryl group, a group constituted from a five- to ten-membered aromatic heterocycle that includes at least one hetero atom selected from a nitrogen atom, an oxygen atom and a sulfur atom is preferred. Specific examples of the heteroaryl group include a furyl group, a thienyl group, a pyrrolyl group, an oxazolyl group, a pyridyl group, a quinolinyl group, a carbazolyl group and the like. As the aryl group, an aryl group having 6 to 14 carbon atoms is preferred, an aryl group having 6 to 10 carbon atoms is more preferred, and a phenyl group is still more preferred. It is to be noted that a substituent for the aryl group is exemplified by an alkyl group having 1 to 6 carbon atoms, an alkoxy group having 1 to 6 carbon atoms, a halogen atom, a trifluoromethyl group, and the like. A position and the number of substituent(s) in the aryl group are not limited, and in the case in which the aryl group has two or more substituents, the two or more substituents may be identical or different.

The alkanediyl group that may be represented by R⁵² or R⁵⁴ may be either linear or branched. The number of carbon atoms in the alkanediyl group is preferably 1 to 10. Specific examples of the alkanediyl group include a methylene group, an ethylene group, an ethane-1,1-diyl group, a propane-1,1-diyl group, a propane-1,2-diyl group, a propane-1,3-diyl group, a propane-2,2-diyl group, a butane-1,2-diyl group, a butane-1,3-diyl group, a butane-1,4-diyl group, a pentane-1,4-diyl group, a pentane-1,5-diyl group, a hexane-1,5-diyl group, a hexane-1,6-diyl group, an octane-1,8-diyl group, a decane-1,10-diyl group and the like. Of these, as the alkanediyl group, an alkanediyl group having 2 to 6 carbon atoms is preferred, an alkanediyl group having 2 to 4 carbon atoms is more preferred, and, in light of ease of manufacture, an ethylene group is still more preferred.

The upper limit of q is preferably 10 and more preferably 8.

As R⁵⁰, a fluorine atom, the fluorinated alkyl group, the alicyclic hydrocarbon group, the fluorinated alkoxy group, R⁵¹COOR⁵²- and R⁵³COOR⁵⁴CFH- are preferred, and a fluorine atom, the alicyclic hydrocarbon group, the perfluoro alkoxy group, R⁵¹COOCH₂CH₁-, and R⁵³COOCH₂CH₂CFH- are more preferred.

In the above formula (7), the alkyl group, the fluorinated alkyl group and the alkoxy group that may be represented by each of R⁵⁵ to R⁵⁹ may be similar to those of the alkyl group, the fluorinated alkyl group and the alkoxy group that may be represented by R⁵⁰ of the formula (6). It is to be noted that at least one of R⁵⁵ to R⁵⁹ represents a fluorine atom or a fluorinated alkyl group, and it is preferred that at least three of R⁵⁵ to R⁵⁹ represent a fluorine atom or a fluorinated alkyl group.

The divalent organic group which may be represented by Y¹ is exemplified by a divalent hydrocarbon group, a group obtained by combining a divalent hydrocarbon group with a linking group that includes a hetero atom, a group obtained by substituting with a halogen atom a part of hydrogen atoms in these groups, and the like. Examples of such a divalent organic group include an alkanediyl group having 1 to 10 carbon atoms, an arylene group having 6 to 20 carbon atoms, an arylene alkanediyl group having 7 to 20 carbon atoms, a group obtained by combining at least one selected from an alkanediyl group having 1 to 10 carbon atoms and an arylene group having 6 to 20 carbon atoms, with at least one selected from -O-, -S-, -COO-, -CONR^{b}- (R^{b} representing a hydrogen atom or an alkyl group having 1 to 8 carbon atoms), and -SO₂-, and the like.

Specific examples of the alkanediyl group include groups similar to those described above, and the like. Of these, as the alkanediyl group, an alkanediyl group having 2 to 8 carbon atoms is preferred, and an alkanediyl group having 2 to 6 carbon atoms is more preferred.

Examples of the arylene group include a phenylene group, a naphthylene group, a biphenylene group, an anthrylene group and the like. As the arylene group, an arylene group having 6 to 10 carbon atoms is preferred, and a phenylene group is more preferred.

The "arylene alkanediyl group" as referred to means a divalent group obtained by combining an arylene group with an alkanediyl group. As the arylene alkanediyl group, in light of availability of a source material and ease of manufacture, an arylene alkanediyl group having 7 to 15 carbon atoms is preferred, and an arylene alkanediyl group having 7 to 13 carbon atoms is more preferred. Specific examples of the arylene alkanediyl group include phenylene C1-6 alkanediyl groups such as a phenylene methylene group, a phenylene dimethylene group, a phenylene trimethylene group, a phenylene tetramethylene group, a phenylene pentamethylene group and a phenylene hexamethylene group, and the like. It is to be noted that the arylene alkanediyl group may be in an ortho form, a meta form or a para form, and a para form is preferred in light of less likelihood of steric hindrance.

As the group obtained by combining at least one selected from an alkanediyl group having 1 to 10 carbon atoms and an arylene group having 6 to 20 carbon atoms, with at least one selected from -O-, -S-, -COO-, -CONR^{b}- (R^{b} representing a hydrogen atom or an alkyl group having 1 to 8 carbon atoms), and -SO₂-: a group obtained by combining at least one selected from an alkanediyl group having 1 to 10 carbon atoms and an arylene group having 6 to 20 carbon atoms, with at least one selected from -O-, -COO-, and -SO₂- is preferred; and a group obtained by combining at least one selected from an alkanediyl group having 1 to 10 carbon atoms and an arylene group having 6 to 20 carbon atoms, with at least one selected from -O- and -SO₂- is more preferred. Specific examples of the alkyl group having 1 to 8 carbon atoms that may be represented by R^{b} include groups similar to those described above, and the like.

Specific examples of the anion having an anionic group and a polymerizable unsaturated group in the compound represented by the above formula (5) include those represented by the following formulae, and the like.

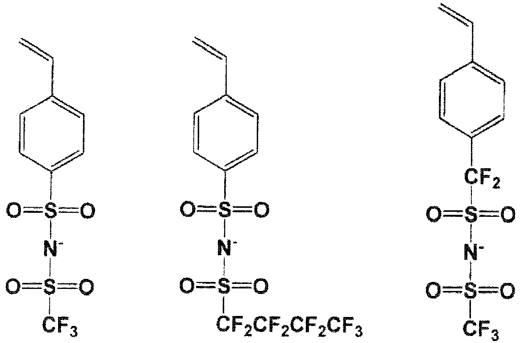

Among the anions that may be included in the compound (a1), the anion having -SO₃⁻ as the anionic group is exemplified by p-styrenesulfonate, and an anion having -SO₃⁻ and a polymerizable unsaturated group disclosed in PCT International Publication No. 2006/121096.

### Compound (a2)

The compound (a2) is a salt of an anionic chromophore with a cation having a cationic group and a polymerizable unsaturated group. The anionic chromophore constitutes the anion of the compound (a2).

Examples of the anionic chromophore include a triarylmethane chromophore, a polymethine chromophore, an azo chromophore, a diarylmethane chromophore, a quinonimine chromophore, an anthraquinone chromophore, a phthalocyanine chromophore, a xanthene chromophore, a squarylium chromophore, a quinophtharone chromophore, a coumarin chromophore, and the like. As the anionic chromophore, a triarylmethane chromophore, an azo chromophore, a phthalocyanine chromophore and a xanthene chromophore are preferred. Of these, those having one or at least two substituents selected from -SO₃⁻ and -COO⁻ are more preferred. As the anionic chromophore, any of dye anions classified as "C.I. Acid" in the Colour Index may be used.

Specific examples of the anionic chromophore include a xanthene chromophore represented by the following formula (8), and the like.

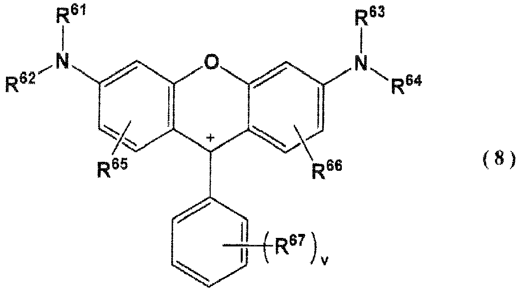

In the above formula (8),
R⁶¹, R⁶², R⁶³ and R⁶⁴ each independently represent a hydrogen atom, -R⁶⁸ or an aromatic hydrocarbon group having 6 to 10 carbon atoms, wherein the hydrogen atom included in the aromatic hydrocarbon group may be substituted with a halogen atom, -R⁶⁸, -OH, -OR⁶⁸, -SO₃H, -SO₃M², -SO3⁻, -COOH, -COOM², -COO⁻, -COOR⁶⁸, -SO₃R⁶⁸, -SO₂NHR⁶⁹, or -SO₂NR⁶⁹R⁷⁰;
R⁶⁵ and R⁶⁶ each independently represent a hydrogen atom or an alkyl group having 1 to 8 carbon atoms;
R⁶⁷ represents -SO₃H, -SO₃M², -SO₃⁻, -COOH, -COOM², -COO⁻, -COOR⁶⁸, -SO₃R⁶⁸, -SO₂NHR⁶⁹, or -SO₂NR⁶⁹R⁷⁰; and
v is an integer of 0 to 5, wherein
in a case where v is no less than 2, a plurality of R⁶⁷s may be identical or different.

R⁶⁸ represents a saturated hydrocarbon group having 1 to 10 carbon atoms, wherein the hydrogen atom included in the saturated hydrocarbon group may be substituted with a halogen atom, and the saturated hydrocarbon group may have -O-, -CO- or -NR^{68A}- between two carbon atoms in a C-C bond, wherein R^{68A} represents a monovalent saturated hydrocarbon group having 1 to 10 carbon atoms.

R⁶⁹ and R⁷⁰ each independently represent an alkyl group having 1 to 10 carbon atoms, a cycloalkyl group having 3 to 30 carbon atoms or -X^{b}, or R⁶⁹ and R⁷⁰ taken together represent a substituted or unsubstituted heterocyclic group having 1 to 10 carbon atoms. The hydrogen atom included in the alkyl group and the cycloalkyl group may be substituted with a hydroxy group, a halogen atom, -X^{b}, -CH=CH₂ or -CH=CHR⁶⁸, and the alkyl group and the cycloalkyl group may have -O-, -CO- or -NR⁶⁸- between two carbon atoms in a C-C bond, wherein the hydrogen atom included in the heterocyclic group may be substituted with -R⁶⁸, -OH, or X^{b}.

M² represents a sodium atom or a potassium atom.

X^{b} represents an aromatic hydrocarbon group having 6 to 10 carbon atoms, or an aromatic heterocyclic group having 5 to 10 carbon atoms. The hydrogen atom included in the aromatic hydrocarbon group and in the monovalent aromatic heterocyclic group may be substituted with -OH, -R⁶⁸, -OR⁶⁸, -NO₂, -CH=CH₂, -CH=CHR₆₈ or a halogen atom.

It is to be noted that any two or more of R⁶¹, R⁶², R⁶³, R⁶⁴ and R⁶⁷ include -SO₃⁻ or -COO⁻.

The aromatic hydrocarbon group that may be represented by each of R⁶¹, R⁶², R⁶³ and R⁶⁴, the alkyl group that may be represented by R⁶⁵ or R⁶⁶, the saturated hydrocarbon group represented by R⁶⁸, the alkyl group, the cycloalkyl group, and the heterocyclic group that may be represented by R⁶⁹ or R⁷⁰, and the aromatic hydrocarbon group and the aromatic heterocyclic group that may be represented by X^{b} may be similar to those of the aromatic hydrocarbon group, the alkyl group, the saturated hydrocarbon group, the heterocyclic group and the aromatic heterocyclic group in the formula (4), and preferred modes thereof are as described for the above formula (4).

It is to be noted that in the xanthene chromophore represented by the above formula (8), any two or more of R⁶¹, R⁶², R⁶³, R⁶⁴ and R⁶⁷ have -SO₃⁻ or -COO⁻. In specifically exemplified modes: two or more of R⁶¹, R⁶², R⁶³ and R⁶⁴ represent aromatic hydrocarbon groups each substituted with -SO₃⁻ or -COO⁻; R⁶⁷ represents two or more selected from -SO₃⁻ and -COO⁻; or one or more of R⁶¹, R⁶², R⁶³ and R⁶⁴ represents an aromatic hydrocarbon group substituted with -SO₃⁻ or -COO⁻ wherein one or more of R⁶⁷ represents -SO₃⁻ or -COO⁻.

Examples of the xanthene chromophore represented by the above formula (8) include chromophores represented by the following formulae, and the like.

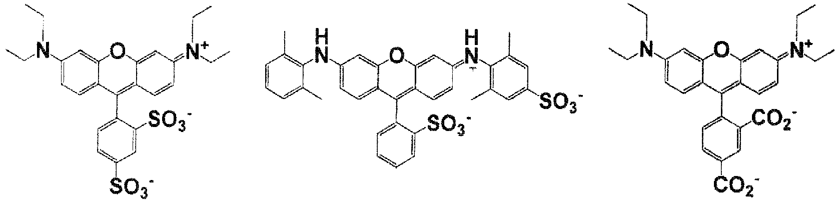

As the anionic chromophore, an anion having an azo chromophore represented by the following formula (a) in a ligand, or the like may also be used. Specific examples thereof include an anion represented by the following formula (b).

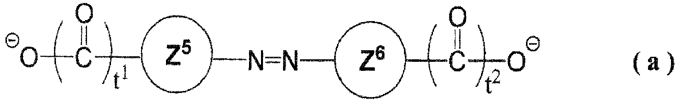

In the above formula (a),
the ring Z⁵ each independently represents a substituted or unsubstituted heterocyclic group;
the ring Z⁶ each independently represents a substituted or unsubstituted aromatic hydrocarbon group; and
t¹ and t² are each independently 0 or 1.

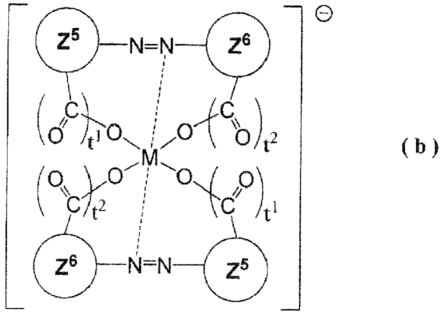

In the formula (b),
the ring Z⁵ each independently represents a substituted or unsubstituted heterocyclic group;
the ring Z⁶ each independently represents a substituted or unsubstituted aromatic hydrocarbon group;
M represents chromium, cobalt, iron, nickel, copper or aluminum;
t¹ and t² are each independently 0 or 1.

The heterocyclic group represented by the ring Z⁵ may be either a monocyclic heterocyclic group or a polycyclic heterocyclic group. Specific examples of the heterocyclic group include groups similar to the heterocyclic groups having 1 to 10 carbon atoms exemplified in the description of the above formula (4), and the like. As the heterocyclic group, a nitrogen-containing aromatic heterocyclic group is preferred, and a pyridyl group and a pyrazolyl group are more preferred. The heterocyclic group may have a substituent, which is exemplified by a halogen atom, a hydroxy group, a cyano group, a formyl group, a carboxy group, a nitro group, an amino group, a dialkylamino group, a diarylamino group, an alkoxy group, an aryloxy group, an alkoxycarbonyl group, an alkylsulfanyl group, an arylsulfanyl group, a trialkylsilyl group, a mercapto group, an allyl group, an alkylsulfonyl group, an alkylsulfamoyl group, an alkyl group, an aromatic hydrocarbon group having 6 to 20 carbon atoms, and the like. As the substituent for the heterocyclic group, a hydroxy group, a cyano group, an alkyl group having 1 to 20 carbon atoms, and a phenyl group are preferred. The alkyl group may have a linking group that includes a hetero atom other than a halogen atom, between two carbon atoms in a C-C bond. The linking group is exemplified by -O-, -S-, -CO-, -COO-, -CONH-, -SO₂, and the like. A position and the number of substituent(s) in the substituent are not limited, and in the case in which the aryl group has two or more substituents, the two or more substituents may be identical or different.

The number of carbon atoms in the aromatic hydrocarbon group in the ring Z⁶ is preferably 6 to 20, and more preferably 6 to 10. Specific examples of the aromatic hydrocarbon group include groups similar to those exemplified for the above formula (1), and the like. Of these, a phenyl group is preferred. Examples of the substituent for the aromatic hydrocarbon group include those exemplified in the description of the heterocyclic group in the ring Z⁵, as well as a sulfo group, a sulfamoyl group, an alkylamide group, and the like. As the substituent, a halogen atom, a hydroxy group, a cyano group, a nitro group, an alkoxy group, a sulfo group, an alkylsulfonyl group, a sulfamoyl group, an alkylsulfamoyl group, an alkylamide group, and an alkyl group are preferred.

The cation of the compound (a2) includes a cationic group and a polymerizable unsaturated group. The cationic group is exemplified by -N⁺R^{e}R^{e}R^{e}, -P⁺R^{e}R^{e}R^{e}, -S⁺R^{e}R^{e}, -I⁺R^{e} (R^{e} each independently representing a hydrogen atom or a monovalent hydrocarbon group having 1 to 10 carbon atoms), -N⁺≡N, and the like. As the cationic group, -N⁺R^{e}R^{e}R^{e} is preferred.

The polymerizable unsaturated group is exemplified by a (meth)acryloyloxy group, a vinylaryl group, a vinyloxy group, an aryl group, and the like. As the polymerizable unsaturated group, a (meth)acryloyloxy group and an allyl group are preferred, and a (meth)acryloyloxy group is more preferred.

As the cation of the compound (a2), a cation represented by the following formula (9) is preferred.

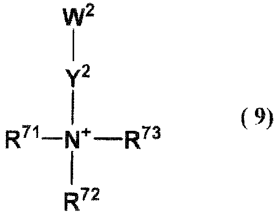

In the above formula (9),
R⁷¹ and R⁷³ each independently represent a hydrogen atom or a monovalent hydrocarbon group having 1 to 10 carbon atoms;
W² represents a polymerizable unsaturated group; and
Y² represents a single bond or a divalent organic group.

The monovalent hydrocarbon group represented by each of R⁷¹ to R⁷³ may be linear, branched, or cyclic, as long as the number of carbon atoms is 1 to 10; may be either a monovalent saturated hydrocarbon group or a monovalent unsaturated hydrocarbon group; and may have a bridged structure. Specifically, the monovalent hydrocarbon group is exemplified by a monovalent aliphatic hydrocarbon group, a monovalent alicyclic hydrocarbon group, a monovalent alicyclic hydrocarbon-substituted aliphatic hydrocarbon group, a monovalent aromatic hydrocarbon group, a monovalent aliphatic hydrocarbon-substituted aromatic hydrocarbon group, a monovalent aromatic hydrocarbon-substituted aliphatic hydrocarbon group, and the like. As the monovalent hydrocarbon group, a monovalent aliphatic hydrocarbon group having 1 to 6 carbon atoms, a monovalent aromatic hydrocarbon group having 6 to 10 carbon atoms, and a monovalent aromatic hydrocarbon-substituted aliphatic hydrocarbon group having 7 to 10 carbon atoms are preferred. As the monovalent aliphatic hydrocarbon group having 1 to 6 carbon atoms, an alkyl group having 1 to 4 carbon atoms is preferred, and a methyl group and an ethyl group are more preferred. As the monovalent aromatic hydrocarbon group having 6 to 10 carbon atoms, a phenyl group and a naphthyl group are preferred. As the aromatic hydrocarbon-substituted aliphatic hydrocarbon group having 7 to 10 carbon atoms, a benzyl group is preferred.

As the polymerizable unsaturated group represented by W², a (meth)acryloyloxy group and an allyl group are preferred, and a (meth)acryloyloxy group is more preferred.

Examples of the divalent organic group that may be represented by Y² include groups similar to those exemplified in connection with the divalent organic group that may be represented by Y¹, and the like. As the divalent organic group, an alkanediyl group having 1 to 6 carbon atoms, and a group obtained by combining an alkanediyl group having 1 to 6 carbon atoms with -O- are preferred. As the alkanediyl group having 1 to 6 carbon atoms, an alkanediyl group having 1 to 4 carbon atoms is preferred, and an ethane-1,2-diyl group and a propane-1,3-diyl group are more preferred. As the group obtained by combining an alkanediyl group having 1 to 6 carbon atoms with -O-, a group obtained by combining an alkanediyl group having 1 to 4 carbon atoms with -O- is preferred, and an ethane-1,2-diyloxy group, a propane-1,3-diyloxy group and a propane-1,3-diyloxy group are more preferred.

Specific examples of the cation having N⁺R^{e}R^{e}R^{e} and a polymerizable unsaturated group in the compound (a2) include:
quaternary ammonium cations having a (meth)acryloyloxy group such as a (meth)acryloyloxyethyltrimethylammonium cation, a (meth)acryloyloxyethyltriethylammonium cation, a (meth)acryloyloxyethyldimethylbenzylammonium cation and a (meth)acryloyloxyethylmethylmorpholinoammonium cation; quaternary ammonium cations having a (meth)acryloylamino group such as (meth)acryloylaminopropyltrimethylammonium cation, a (meth)acryloylaminoethyltriethylammonium cation and a (meth)acryloylaminoethyldimethylbenzylammonium cation; a dimethyldiallylammonium cation; a trimethylvinylphenylammonium cation; and the like.

### Compound (a3)

The compound (a3) has an electrically neutral chromophore and a polymerizable unsaturated group. Examples of the electrically neutral chromophore include a triarylmethane chromophore, a polymethine chromophore, an azo chromophore, a diarylmethane chromophore, a quinonimine chromophore, an anthraquinone chromophore, a phthalocyanine chromophore, a xanthene chromophore, a squarylium chromophore, a quinophtharone chromophore, a coumarin chromophore, and the like. These chromophores each have neither of a positively charged functional group and a negatively charged functional group, or each have the same number of positively charged functional group(s) and negatively charged functional group(s). As the electrically neutral chromophore, a triarylmethane chromophore, a polymethine chromophore, an azo chromophore, an anthraquinone chromophore, a phthalocyanine chromophore, a xanthene chromophore, a squarylium chromophore, and a quinophtharone chromophore are preferred.

Specific examples of the electrically neutral chromophore having the same number of positively charged functional group(s) and negatively charged functional group(s) include a xanthene chromophore represented by the following formula (10), and the like.

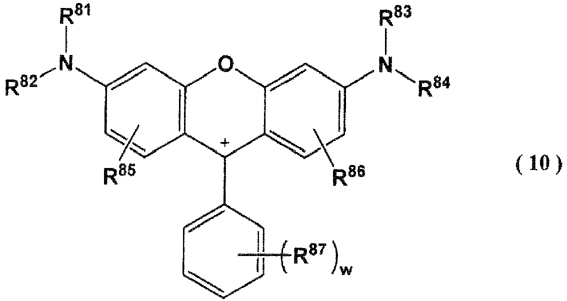

In the above formula (10),
R⁸¹, R⁸², R⁸³ and R⁸⁴ each independently represent a hydrogen atom, -R⁸⁸ or an aromatic hydrocarbon group having 6 to 10 carbon atoms, wherein the hydrogen atom included in the aromatic hydrocarbon group may be substituted with a halogen atom, -R⁸⁸, -OH, -OR⁸⁸, -SO₃H, -SO₃M³, -SO₃⁻, -COOH, -COOM³, -COO⁻, -COOR⁸⁸, -SO₃R⁸⁸, -SO₂NHR⁸⁹ or -SO₂NR⁸⁹R⁹⁰;
R⁸⁵ and R⁸⁶ each independently represent a hydrogen atom or an alkyl group having 1 to 8 carbon atoms;
R⁸⁷ represents -SO₃H, -SO₃M³, -SO₃⁻, -COOH, -COOM³, -COO⁻, -COOR⁸⁸, -SO₃R⁸⁸, -SO₂NHR⁸⁹ or -SO₂NR⁸⁹R⁹⁰; and
w is an integer of 0 to 5, wherein
in a case where w is no less than 2, a plurality of R⁸⁷s may be identical or different.

R⁸⁸ represents a saturated hydrocarbon group having 1 to 10 carbon atoms, wherein the hydrogen atom included in the saturated hydrocarbon group may be substituted with a halogen atom, and the saturated hydrocarbon group may have -O-, -CO- or -NR^{88A}- between two carbon atoms in a C-C bond, wherein R^{88A} represents a monovalent saturated hydrocarbon group having 1 to 10 carbon atoms.

R⁸⁹ and R⁹⁰ each independently represent an alkyl group having 1 to 10 carbon atoms, a cycloalkyl group having 3 to 30 carbon atoms or -X^{c}, or R⁸⁹ and R⁹⁰ taken together represent a substituted or unsubstituted heterocyclic group having 1 to 10 carbon atoms. The hydrogen atom included in the alkyl group and the cycloalkyl group may be substituted with a hydroxy group, a halogen atom, -X^{c}, -CH=CH₂ or -CH=CHR⁸⁸, and the alkyl group and the cycloalkyl group may have -O-, -CO- or -NR⁸⁸- between two carbon atoms in a C-C bond, wherein the hydrogen atom included in the heterocyclic group may be substituted with -R⁸⁸, -OH or X^{c}.

M³ represents a sodium atom or a potassium atom.

X^{c} represents an aromatic hydrocarbon group having 6 to 10 carbon atoms, or an aromatic heterocyclic group having 5 to 10 carbon atoms. The hydrogen atom included in the aromatic hydrocarbon group and in the monovalent aromatic heterocyclic group may be substituted with -OH, -R⁸⁸, -OR⁸⁸, -NO₂, -CH=CH₂, -CH=CHR⁸⁸ or a halogen atom.

It is to be noted that any one of R⁸¹, R⁸², R⁸³, R⁸⁴ and R⁸⁷ has -SO₃⁻ or -COO⁻.

The aromatic hydrocarbon group that may be represented by each of R⁸¹, R⁸², R⁸³ and R⁸⁴, the alkyl group that may be represented by R⁸⁵ or R⁸⁶, the saturated hydrocarbon group represented by R⁸⁸, the alkyl group, the cycloalkyl group, and the heterocyclic group that may be represented by R⁸⁹ or R⁹⁰, and the aromatic hydrocarbon group and the aromatic heterocyclic group that may be represented by X^{c} may be similar to those of the aromatic hydrocarbon group, the alkyl group, the saturated hydrocarbon group, the heterocyclic group and the aromatic heterocyclic group in the above formula (4), and preferred modes thereof are as described for the above formula (4).

In the xanthene chromophore represented by the above formula (10), any one of R⁸¹, R⁸², R⁸³, R⁸⁴ and R⁸⁷ has -SO₃⁻ or -COO⁻. In a specifically exemplified mode, any one of R⁸¹, R⁸², R⁸³ and R⁸⁴ represents an aromatic hydrocarbon group substituted with -SO₃⁻ or -COO⁻; or R⁸⁷ represents one selected from -SO₃⁻ and -COO⁻.

The squarylium chromophore is exemplified by compounds disclosed in paragraphs [0132] to [0135] of Japanese Unexamined Patent Application, Publication No. 2012-013945, and the like.

The quinophtharone chromophore is exemplified by compounds disclosed in paragraphs [0084] to [0115] of Japanese Unexamined Patent Application, Publication No. 2013-209614, and the like.

The polymerizable unsaturated group is exemplified by a (meth)acryloyloxy group, a vinylaryl group, a vinyloxy group, an aryl group, and the like. As the polymerizable unsaturated group, a (meth)acryloyloxy group is preferred.

As the compound (a3), a compound represented by the following formula (11) is preferred.

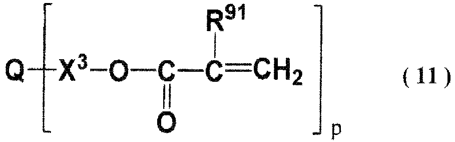

In the above formula (11),
R⁹¹ represents a hydrogen atom or a methyl group;
X³ represents a single bond, a substituted or unsubstituted divalent hydrocarbon group, or a divalent group obtained by combining a divalent hydrocarbon group with at least one linking group that includes a hetero atom; and
Q represents an electrically neutral chromophore having a valency of p, wherein
p is an integer of no less than 1.

The electrically neutral chromophore having a valency of p represented by Q is exemplified by a chromophore obtained by removing p hydrogen atoms from an electrically neutral chromophore, and the like. Examples of the electrically neutral chromophore include a triarylmethane chromophore, a polymethine chromophore, an azo chromophore, a diarylmethane chromophore, a quinonimine chromophore, an anthraquinone chromophore, a phthalocyanine chromophore, a xanthene chromophore, a squarylium chromophore, a quinophtharone chromophore, a coumarin chromophore, and the like described above. As the electrically neutral chromophore, a triarylmethane chromophore, a polymethine chromophore, an azo chromophore, an anthraquinone chromophore, a phthalocyanine chromophore, a xanthene chromophore, a squarylium chromophore, and a quinophtharone chromophore are preferred. These electrically neutral chromophores each have neither of a positively charged functional group and a negatively charged functional group, or each have the same number of positively charged functional group(s) and negatively charged functional group(s). Specific examples of the electrically neutral chromophore having one positively charged functional group and one negatively charged functional group include the xanthene chromophore represented by the above formula (10), and the like.

Preferably p is an integer of 1 to 8, and more preferably an integer of 1 to 4.

The monovalent hydrocarbon group which may be represented by X³ is exemplified by a divalent aliphatic hydrocarbon group, a divalent alicyclic hydrocarbon group, a divalent aromatic hydrocarbon group, and the like. The divalent aliphatic hydrocarbon group may be either linear or branched. The divalent aliphatic hydrocarbon group and the divalent alicyclic hydrocarbon group may each be either a saturated hydrocarbon group or an unsaturated hydrocarbon group. The divalent alicyclic hydrocarbon group and the divalent aromatic hydrocarbon group may each be substituted with an aliphatic hydrocarbon group.

The divalent aliphatic hydrocarbon group is exemplified by an alkanediyl group, an alkenediyl group, and the like. The lower limit of the number of carbon atoms in the divalent aliphatic hydrocarbon group is preferably 1, and more preferably 2. Meanwhile, the upper limit of the number of carbon atoms is preferably 20, more preferably 12, and still more preferably 6. Specific examples of the divalent aliphatic hydrocarbon group include groups similar to those described above, and the like.

The divalent alicyclic hydrocarbon group is exemplified by a cycloalkylene group, a cycloalkenylene group, and the like. The number of carbon atoms in the divalent alicyclic hydrocarbon group is preferably 3 to 20, and more preferably 3 to 12. Specific examples of the divalent alicyclic hydrocarbon group include: monocyclic hydrocarbon groups such as a cyclo propylene group, a cyclobutylene group, a cyclopentylene group, a cyclobutenylene group, a cyclopentenylene group and a cyclohexenylene group; norbornylene groups such as a 1,4-norbornylene group, a 2,5-norbornylene group; and crosslinked cyclic hydrocarbon ring groups such as a 1,5-adamantylene group and a 2,6-adamantylene group; and the like.

The divalent aromatic hydrocarbon group may be either a monocyclic aromatic hydrocarbon group or a polycyclic aromatic hydrocarbon group. The number of carbon atoms in the divalent aromatic hydrocarbon group is preferably 6 to 14. Specific examples of the divalent aromatic hydrocarbon group include a phenylene group, a biphenylene group, a naphthylene group, a phenanthrene group, an anthrylene group and the like.

The linking group in the divalent group obtained by combining a divalent hydrocarbon group with at least one linking group that includes a hetero atom is exemplified by -O-, -S-, -SO₂-, -CO-, -COO-, -OCO-, -CONR^{d}- (R^{d} representing a hydrogen atom or an alkyl group having 1 to 6 carbon atoms), -NR^{d}- (R^{d} is as defined above), and the like. The divalent group may include one, or two or more types of these linking groups. The bonding site for the linking group is not limited, and may be at a terminal of the divalent hydrocarbon group or between two carbon atoms in a C-C bond. Of these, the bonding site at one terminal or between two carbon atoms in a C-C bond is preferred. In addition, the divalent hydrocarbon group and the linking group may bond with each other to form a ring structure. It is to be noted that, in the divalent group, the "number of carbon atoms" as referred to means a total number of carbon atoms in the part other than a carbon atom constituting the linking group.

Specific examples of the divalent hydrocarbon group having the linking group between the C-C bond include -CH₂-CH₂-CH₂-COO-CH₂-CH₂-, -CH₂-CH(-CH₃)-CH₂-COO-CH₂-CH₂-, -CH₂-CH₂-CH₂-OCO-CH₂-CH₂-, -CH₂-CH₂-CH₂-CH₂-COO-CH₂-CH(CH₂-CH₃)-CH₂-CH₂-CH₂-CH₂-, -CH₂-CH₂-CH₂-O-CH₂-CH(CH₂-CH₃)-CH₂-CH₂-CH₂-CH₂-, -(CH₂)₅-COO-(CH₂)₁₁-CH₂-, -CH₂-CH₂-CH₂-C-(COO-CH₂-CH₃)₂-, -CH₂-CH₂-O-CH₂-CH₂-, -CH₂-CH₂-CH₂-O-CH₂-CH₂-, -(CH₂-CH₂-O)n-CH₂- (n being an integer of 1 to 8), -(CH₂-CH₂-CH₂-O)m-CH₂- (m being an integer of 1 to 5), -CH₂-CH(CH₃)-O-CH₂-CH₂-, -CH₂-CH-(OCH₃)-, -CH₂-CH₂-COO-CH₂-CH₂-O-CH₂-CH(CH₂-CH₃)-CH₂-CH₂-CH₂-CH₂-, -CH₂-CH₂-CH₂-O-CO-CH₂-CH(CH₂-CH₃)-CH₂-CH₂-CH₂-CH₂-, -CH₂-CH₂-COO-CH₂-CH₂-O-CH₂-CH₂-O-CH₂-CH(CH₂-CH₃)-CH₂-CH₂-CH₂-CH₂-, -CH₂-CH₂-NH-COO-CH₂-CH₂-, -CH₂-CH₂-OCO-CH₂- and the like, but the divalent hydrocarbon group is not limited thereto.

Specific examples of the group having a ring structure formed from the divalent hydrocarbon group and the linking group being bonded with each other include the following groups, but the group is not limited thereto.

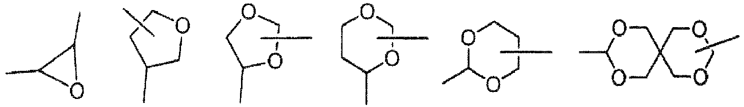

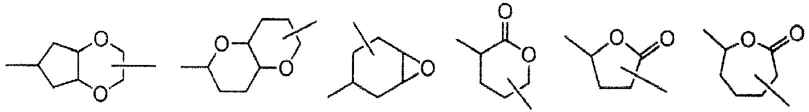

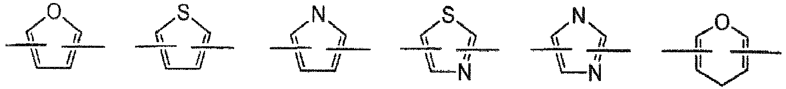

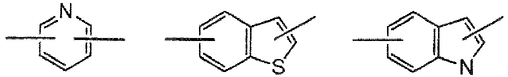

The substituent included in the divalent hydrocarbon group is exemplified by a halogen atom, a nitro group, a hydroxy group, a substituted or unsubstituted alkoxyl group, a substituted or unsubstituted aryloxy group, a substituted or unsubstituted arylalkoxy group, and the like. Examples of the halogen atom include a fluorine atom, a chlorine atom, a bromine atom, an iodine atom, and the like. The alkoxyl group may be either linear or branched, and preferably has 1 to 6 carbon atoms. Specific examples of the alkoxyl group include a methoxy group, an ethoxy group, a propoxy group, a butoxy group, and the like. As the aryloxy group, an aryloxy group having 6 to 14 carbon atoms is preferred, and a phenoxy group is more preferred. As the arylalkoxy group, an arylalkoxy group having 7 to 14 carbon atoms is preferred, and a benzyloxy group is more preferred. A substituent for the alkoxyl group, the aryloxy group and the arylalkoxy group is exemplified by a halogen atom, a nitro group, a hydroxy group, an amino group, a carboxy group, a sulfanyl group, and the like. Furthermore, in the case in which the divalent hydrocarbon group is the divalent aromatic hydrocarbon group, the divalent aromatic hydrocarbon group may be substituted with a substituted or unsubstituted alkyl group or a substituted or unsubstituted alkenyl group. The number of carbon atoms in the alkyl group and the alkenyl group is preferably 1 to 6. Specific examples of the alkyl group and the alkenyl group, and specific examples of substituent therefor include groups similar to those described above, and the like.

### Structural Unit (A)

As the structural unit (I) included in the polymer (A), a structural unit derived from the compound (a1) is preferred, and the structural unit (A) represented by the following formula (I) is more preferred.

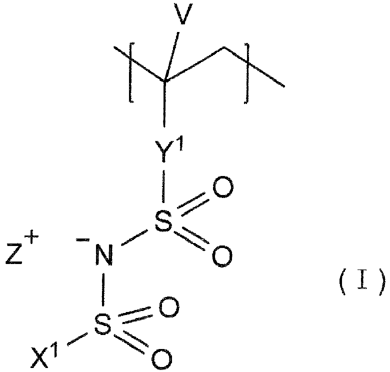

In the above formula (I),
V represents a hydrogen atom or a methyl group;
X¹ represents an alkyl group or a fluorinated alkyl group;
Y¹ represents a divalent hydrocarbon group; and
Z⁺ represents a cationic chromophore.

As V, a hydrogen atom is preferred in light of a degree of copolymerization of a monomer for forming the structural unit (A).

The alkyl group that may be represented by X¹ is exemplified by a saturated alkyl group, an unsaturated alkyl group, a cycloalkyl group and the like. The alkyl group may be a linear, branched, or cyclic alkyl group, of which specific examples include a methyl group, an ethyl group, a n-propyl group, a n-butyl group, a n-amyl group, a n-hexyl group, a-heptyl group, a n-octyl group, a n-nonyl group, a n-decyl group, a n-undecyl group, a n-dodecyl group, a n-tridecyl group, a n-tetradecyl group, a n-pentadecyl group, a n-hexadecyl group, a n-heptadecyl group, a n-octadecyl group, a n-nonadecyl group, a n-eicosanyl group, an i-propyl group, a sec-butyl group, an i-butyl group, a t-butyl group, a 1-methylbutyl group, a 1-ethylpropyl group, a 2-methylbuty group, an i-amyl group, a neopentyl group, a 1,2-dimethylpropyl group, a 1,1-dimethylpropyl group, a t-amyl, a 1,3-dimethylbutyl group, a 3,3-dimethylbutyl group, a 2-ethylbutyl group, a 2-ethyl-2-methylpropyl group, a linear or branched heptyl group, a 1-methylheptyl group, a 2-ethylhexyl group, a 1,5-dimethylhexyl group, a t-octyl group, a branched nonyl group, a branched decyl group, a branched undecyl group, a branched dodecyl group, a branched tridecyl group, a branched tetradecyl group, a branched pentadecyl group, a branched hexadecyl group, a branched heptadecyl group, a branched octadecyl group, a linear or branched nonadecyl group, a linear or branched eicosanyl group, a cyclopropyl group, a cyclopropylmethyl group, a cyclobutyl group, a cyclobutylmethyl group, a cyclopentyl group, a cyclohexyl group, a cyclohexylmethyl group, a cycloheptyl group, a cyclooctyl group, a cyclohexylpropyl group, a cyclododecyl group, a norbornyl group, a bornyl group, a cis-myrtanyl group, an isopinocamphenyl group, a noradamantyl group, an adamantyl group, an adamantylmethyl group, a 1-(1-adamantyl)ethyl group, a 3,5-dimethyladamantyl group, a quinuclidinyl group, a cyclopentylethyl group, a bicyclooctyl group and the like.

The fluorinated alkyl group that may be represented by X¹ is exemplified by a group obtained by substituting with a fluorine atom a part or all of hydrogen atoms in any one of groups exemplified as the alkyl group that may be represented by X¹, and the like. Examples of the fluorinated alkyl group include a trifluoromethyl group, a difluoromethyl group, a fluoromethyl group, a pentafluoroethyl group, a 2,2,2-trifluoroethyl group, a 2-fluoroethyl group, a 3,3,3-trifluoropropyl group, a 3-fluoropropyl group and the like.

As X¹, a fluorinated alkyl group having 1 to 3 carbon atoms is preferred, a perfluoroalkyl group is more preferred, and a trifluoromethyl group is still more preferred.

The divalent hydrocarbon group represented by Y¹ is exemplified by a linear alkylene group having 1 to 10 carbon atoms, a branched alkylene group having 1 to 10 carbon atoms, an arylene group having 6 to 20 carbon atoms, an arylalkylene group having 7 to 20 carbon atoms, and the like.

The alkylene group that may be represented by Y¹ may be either linear or branched, in which the number of carbon atom(s) is preferably an integer of 1 to 10. Examples of the alkylene group include a methylene group, an ethylene group, an ethane-1,1-diyl group, a propane-1,1-diyl group, a propane-1,2-diyl group, a propane-1,3-diyl group, a propane-2,2-diyl group, a butane-1,2-diyl group, a butane-1,3-diyl group, a butane-1,4-diyl group, a pentane-1,4-diyl group, a pentane-1,5-diyl group, a hexane-1,5-diyl group, a hexane-1,6-diyl group, an octane-1,8-diyl group, a decane-1,10-diyl group and the like. Of these, as the alkylene group, an alkanediyl group having 2 to 8 carbon atoms is preferred, and an alkanediyl group having 2 to 6 carbon atoms is more preferred.

The arylene group that may be represented by Y¹ is exemplified by a phenylene group, a naphthylene group, a biphenylene group, an anthryl group and the like. As the arylene group, an arylene group having 6 to 10 carbon atoms is preferred, and a phenylene group is more preferred.

The "arylene alkanediyl group" that may be represented by Y¹ means a divalent group obtained by combining an arylene group with an alkanediyl group. As the arylene alkanediyl group, in light of availability of a source material and ease of manufacture, an arylene alkanediyl group having 7 to 15 carbon atoms is preferred, and an arylene alkanediyl group having 7 to 13 carbon atoms is more preferred. Examples of the arylene alkanediyl group having 7 to 13 carbon atoms include phenylene C₁₋₆ alkanediyl groups such as a phenylene methylene group, a phenylene dimethylene group, a phenylene trimethylene group, a phenylene tetramethylene group, a phenylene pentamethylene group and a phenylene hexamethylene group, and the like. It is to be noted that these arylene alkanediyl group may be in an ortho form, a meta form and a para form, or a para form is preferred in light of less likelihood of steric hindrance.

As Y¹, the arylene group is preferred, and a phenylene group is more preferred.

As the cationic chromophore represented by Z⁺, the chromophore represented by the above formula (1) is preferred.

### Structural Unit (II)

The structural unit (II) does not have a chromophore. The monomer for forming the structural unit (II) is not particularly limited as long as it is a compound that is copolymerizable with at least one of the compounds (a1) to (a3) and does not have a chromophore, and a compound having two or more crosslinkable groups is preferred. Due to forming the structural unit (II) from the compound having two or more crosslinkable groups, an improvement of the inversion rate during the polymerization reaction is enabled, while inhibition of the oxidative degradation of the resulting polymer (A) is enabled.

In the polymer (A), at least a part of the second structural unit (II) forms a cross-linked structure. Due to the polymer (A) thus cross-linked, inhibition of the oxidative degradation is enabled.

Examples of the compound having two or more crosslinkable groups include:
aliphatic conjugated diene compounds such as 1,3-butadiene, 2-methyl-1,3-butadiene, 2-chloro-1,3-butadiene and 2,3-dimethyl-1,3-butadiene;
non-conjugated divinyl compounds such as divinylbenzene, diisopropenylbenzene and trivinylbenzene;
alkyleneglycol di(meth)acrylate compounds such as ethyleneglycol di(meth)acrylate, polyethyleneglycol di(meth)acrylate, 1,3-butyleneglycol di(meth)acrylate, 1,6-hexaneglycol di(meth)acrylate, 1,6-hexaneglycol di(meth)acrylate, neopentylglycol di(meth)acrylate and polypropylene glycol di(meth)acrylate;
di(meth)acrylate compounds such as 2,2-bis(4-(meth)acryloxypropyloxyphenyl)propane and 2,2-bis(4-(meth)acryloxydiethoxyphenyl)propane; and the like.

As the compound having two or more crosslinkable groups, the non-conjugated divinyl compounds and the di(meth)acrylate compounds are preferred, the non-conjugated divinyl compounds and the alkyleneglycol di(meth)acrylate compounds are more preferred, and divinylbenzene and ethyleneglycol di(meth)acrylate are still more preferred.

Examples of the monomer for forming the structural unit (II) other than the compound having two or more crosslinkable groups include:
ethylenic unsaturated monomers having a carboxy group such as (meth)acrylic acid, maleic acid, maleic anhydride, mono [2-(meth)acryloyloxyethyl] succinate, ω-carboxy polycaprolactone mono(meth)acrylate and p-vinylbenzoate;
N-substituted maleimides such as N-phenylmaleimide and N-cyclohexylmaleimide;
aromatic vinyl compounds such as styrene, α-methylstyrene, p-hydroxystyrene, p-hydroxy-α-methylstyrene, p-vinylbenzylglycidylether, glycidyl ether and acenaphthylene;
(meth)acrylic acid esters such as methyl (meth)acrylate, n-butyl (meth)acrylate, 2-ethylhexyl (meth)acrylate, 2-hydroxyethyl (meth)acrylate, allyl (meth)acrylate, benzyl (meth)acrylate, polyethylene glycol (degree of polymerization: 2 to 10) methyl ether (meth)acrylate, polypropylene glycol (degree of polymerization: 2 to 10) methyl ether (meth)acrylate, polyethylene glycol (degree of polymerization: 2 to 10) mono(meth)acrylate, polypropylene glycol (degree of polymerization: 2 to 10) mono(meth)acrylate, cyclohexyl (meth)acrylate, isobornyl (meth)acrylate, tricyclo[5.[2][1]0^{2,6}]decan-8-yl (meth)acrylate, dicyclopentenyl (meth)acrylate, glycerol mono(meth)acrylate, 4-hydroxyphenyl (meth)acrylate, ethylene oxide-modified (meth)acrylate of paracumyl phenol, glycidyl (meth)acrylate, 3,4-epoxycyclohexylmethyl (meth)acrylate, 3-[(meth)acryloyloxymethyl]oxetane and 3-[(meth)acryloyloxymethyl]-3-ethyloxetane; vinyl ethers such as cyclohexyl vinyl ether, isobornyl vinyl ether, tricyclo[5.[2][1]0^{2,6}]decan-8-yl vinyl ether, pentacyclopentadecanyl vinyl ether and 3-(vinyloxymethyl)-3-ethyloxetane;
macromonomers having a mono(meth)acryloyl group at a terminal of a polymer molecular chain such as polystyrene, polymethyl (meth)acrylate, poly-n-butyl (meth)acrylate and polysiloxane; and the like.

As the monomer for forming the structural unit (II) other than the compound having two or more crosslinkable groups, a (meth)acrylic acid ester and an ethylenic unsaturated monomer having a carboxy group are preferred in light of the inversion rate and strength and solvent resistance of the resulting polymer (A).

In the case of the polymer (A) having the structural unit (II), the lower limit of the proportion of the structural unit (I) contained with respect to the total structural units is preferably 0.5% by mass, more preferably 5% by mass, still more preferably 10% by mass, and particularly preferably 15% by mass. Meanwhile, the upper limit of the proportion is preferably 90% by mass, more preferably 85% by mass, still more preferably 80% by mass, particularly preferably 50% by mass, still particularly preferably 40% by mass, and most preferably 35% by mass. When the proportion falls within the above range, a further improvement of the inversion rate during the polymerization reaction is enabled, while further inhibition of the oxidative degradation of the resulting polymer (A) is enabled.

In the case of the polymer (A) having, as the structural unit (II), a structural unit derived from the compound having two or more crosslinkable groups, the lower limit of the proportion of the structural unit derived from the compound having two or more crosslinkable groups contained with respect to the total structural units is preferably 5% by mass, more preferably 10% by mass, and still more preferably 15% by mass. Meanwhile, the upper limit of the proportion is preferably 50% by mass, and more preferably 40% by mass. When the proportion falls within the above range, an increase in the conversion rate during the polymerization reaction is enabled, while further inhibition of the oxidative degradation of the resulting polymer (A) is enabled.

### Production Process of (A) Polymer

A production process of the polymer (A) is preferably the emulsion polymerization. The emulsion polymerization is exemplified by a process which includes adding to an aqueous dispersion medium such as water, monomers such as the compounds (a1) to (a3), a chain transfer agent, a polymerization initiator, a surfactant, and the like to allow the emulsion polymerization to take place.

The polymer (A) is preferably produced by a production process including at least the following steps (1) and (2).

Step (1): preparing a mixture liquid containing at least water, a surfactant (i), and the monomer, as well as a solution containing at least a polymerization initiator (ii).

Step (2): mixing the mixture liquid containing the monomer with the solution containing the polymerization initiator, both obtained after the step (1) to allow the emulsion polymerization to take place.

Hereinafter, each step is explained.

### Step (1)

In the step (1), the mixture liquid containing at least water, (i) a surfactant, and the monomer (hereinafter, may be also referred to as "monomer mixture liquid"), as well as a solution containing at least a (ii) polymerization initiator (hereinafter, may be also referred to as "polymerization initiator solution") are prepared. The polymerization initiator solution may further contain water and the surfactant (i). The mass ratio of the polymerization initiator solution to the monomer mixture liquid is, for example, no less than 0.01 and no greater than 5.0. Hereinafter, each component is explained.

### (i) Surfactant

As the surfactant (i), a well-known surfactant typically used for the emulsion polymerization may be used. Examples of such a surfactant include:
alkali metal salts (in particular sodium salts and potassium salts) of fatty acids such as lauric acid, myristic acid, palmitic acid, stearic acid and oleic acid;
anionic surfactants such as sodium lauryl sulfate, sodium lauryl sulfonate, sodium dodecyl sulfonate, sodium dodecyl benzene sulfonate, sodium dodecyl diphenyl ether sulfonate, sodium sulfosuccinate dialkyl ester, sodium polyoxyethylene alkyl ether sulfonate, an alkali metal salt (in particular a sodium salt or a potassium salt) of a resin acid, and a sodium naphthalene sulfonate formaldehyde condensate;
nonionic surfactants such as a polyoxyethylene alkyl ester and polyoxyethylene alkyl aryl ether;
alkylbetaine type salts such as a salt of laurylbetaine and a salt of stearylbetaine;
ampholytic surfactants of amino acid type, etc., such as lauryl-β-alanine, lauryl di(aminoethyl)glycine and octyl di(aminoethyl)glycine; and the like.

The lower limit of the amount of the surfactant (i) used is preferably 0.1 parts by mass, more preferably 1 part by mass, and still more preferably 10 parts by mass with respect to 100 parts by mass of the monomer. Meanwhile, the upper limit of the amount of the surfactant (i) used is preferably 100 parts by mass and more preferably 40 parts by mass with respect to 100 parts by mass of the monomer. The "amount used" of each component for use in the emulsion polymerization as referred to herein means a sum of a content in the monomer mixture liquid and a content in the polymerization initiator solution.

### (ii) Polymerization Initiator

As the polymerization initiator (ii), a well-known polymerization initiator typically used for the emulsion polymerization may be used. The polymerization initiator (ii) is exemplified by: inorganic persulfates such as potassium persufate, sodium persufate and ammonium persulfate; organic peroxides such as cumene hydroperoxide, benzoyl peroxide and isopropyl benzeneperoxide; azo initiators such as azoisobutyronitrile; and the like. These polymerization initiators may be used either alone of one type, or in combination of two or more types thereof.

These polymerization initiator may be used in combination with a reducing agent, i.e., as a so-called redox type initiator. The reducing agent is exemplified by: reducing sulfoxylates such as a sulfite, a bisulfite, a pyrosulfite, a dithionite, a dithionate, a thiosulfate, a formaldehyde sulfonate and benzaldehyde sulfonate; ferrous sulfate; ferrous ammonium sulfate; cuprous naphthenate; and the like.

As the polymerization initiator (ii), inorganic persulfates such as potassium persufate, sodium persufate and ammonium persulfate are preferred in light of polymerization stability.

The lower limit of the amount of the polymerization initiator (ii) used is preferably 0.1 parts by mass and more preferably 0.2 parts by mass with respect to 100 parts by mass of the monomer. Meanwhile, the upper limit of the amount of the polymerization initiator (ii) used is preferably 10 parts by mass, more preferably 8 parts by mass, still more preferably 5 parts by mass, and particularly preferably 2 parts by mass, with respect to 100 parts by mass of the monomer.

### (iii) Chain Transfer Agent

To the monomer mixture liquid and to the polymerization initiator solution, (iii) a chain transfer agent may be added. As the chain transfer agent (iii), a well-known chain transfer agent typically used for the emulsion polymerization may be used. Such a chain transfer agent is exemplified by: mercaptans such as octyl mercaptan, n-dodecyl mercaptan, t-dodecyl mercaptan, n-hexadecyl mercaptan, n-tetradecyl mercaptan and t-tetradecyl mercaptan; xanthic disulfides such as dimethyl xanthic disulfide, diethyl xanthic disulfide and diisopropyl xanthic disulfide; thiuram disulfides such as tetramethyl thiuram disulfide, tetraethyl thiuram disulfide and tetrabutyl thiuram disulfide; halogenated hydrocarbons such as carbon tetrachloride and ethylene bromide; hydrocarbons such as pentaphenylethane, 1,1-diphenylethylene and α-methylstyrene dimer; acrolein; methacrolein, allyl alcohol, 2-ethylhexyl thioglycolate; terpinolen; α-terpinene; γ-terpinene; dipentene; and the like. These chain transfer agents may be used either alone of one type, or in combination of two or more types thereof.

The lower limit of the amount of the chain transfer agent (iii) used is preferably 0.05 parts by mass, more preferably 0.1 parts by mass, and still more preferably 0.2 parts by mass with respect to 100 parts by mass of the monomer. Meanwhile, the upper limit of the amount of the chain transfer agent (iii) used is preferably 20 parts by mass, more preferably 15 parts by mass, and still more preferably 10 parts by mass.

### (iv) Other Components

To the monomer mixture liquid and to the polymerization initiator solution, a chelating agent such as sodium ethylenediaminetetraacetate, a dispersant such as a polycarboxylate, an inorganic salt such as a phosphate, and the like may be added. Furthermore, in the emulsion polymerization, additives may be added as needed, for example: a pH adjusting agent such as ammonia, sodium hydroxide and potassium hydroxide; an anti-aging agent such as styrenated phenol, hindered phenol, imidazole and paraphenylenediamine; a fragrance such as acetophenone, cinnamic aldehyde, vanillin and lavender oil; an antimicrobial such as thiabendazole, Preventol and Vinadine; a defoaming agent such as a silicone defoaming agent and a higher alcohol defoaming agent; a reaction terminator such as a dimethyldithiocarbamate, N,N-dimethylhydroxylamine and thiourea; an anti-freezing agent such as ethylene glycol, diethylene glycol and urea; and the like.

Preparation processes of the monomer mixture liquid and the polymerization initiator solution are not particularly limited, and the liquid and the solution may be prepared either by adding each component separately or by adding all components simultaneously. In the case of adding each component separately, the order of addition of each component is not particularly limited. The concentration of the monomer in the monomer mixture liquid may be appropriately selected, and is preferably no less than 1% by mass and no greater than 50% by mass. Meanwhile, the concentration of the polymerization initiator in the polymerization initiator solution may be appropriately selected, and is preferably no less than 0.01% by mass and no greater than 0.5% by mass. The monomer mixture liquid and the polymerization initiator solution may be either emulsified after the preparation thereof, or directly subjected to the subsequent step without being emulsified. The emulsification process is not particularly limited, and a well-known process may be appropriately selected.

### Step (2)

In the step (2), the mixture liquid containing the monomer is mixed with the solution containing the polymerization initiator, both obtained after the step (1) to allow the emulsion polymerization to take place. In the step (2), the reactor may be charged with the monomer mixture liquid by any of: a procedure of adding the entirety of the monomer mixture liquid at once; a procedure of adding the monomer mixture liquid continuously or intermittently as the polymerization proceeds; a procedure of adding a part of the monomer mixture liquid to start the polymerization, and then adding the remaining monomer mixture liquid at once, or continuously or intermittently to permit the polymerization; and the like. Furthermore, in the step (2), the reactor may be charged with the polymerization initiator solution by any of: a procedure of adding the entirety of the polymerization initiator solution at once; a procedure of adding the polymerization initiator solution continuously or intermittently as the polymerization proceeds; a procedure of adding a part of the polymerization initiator solution to start the polymerization, and then adding the remaining polymerization initiator solution at once, or continuously or intermittently to permit the polymerization; and the like. In these cases, constitutions of the monomer mixture liquid and/or the polymerization initiator solution to be continuously or intermittently added may be identical or varied.

The lower limit of the polymerization temperature for the emulsion polymerization is preferably 5 °C, and more preferably 20 °C. Meanwhile, the upper limit of the polymerization temperature is preferably 85 °C, and more preferably 80 °C. The polymerization time period of the emulsion polymerization is preferably no less than 1 hour and no greater than 12 hrs. It is preferred that the emulsion polymerization is carried out in an atmosphere of inert gas such as nitrogen gas or argon gas. It is to be noted that the final polymerization conversion rate in the emulsion polymerization is preferably no less than 90%.

The resulting polymer (A) may be purified as needed. A process of purifying the polymer (A) contained in the reaction liquid (suspension liquid) after the emulsion polymerization is exemplified by filtration, centrifugal separation, decantation, and the like.

The lower limit of the content of the ink agent for textile of the present embodiment in the ink is preferably 0.1% by mass, more preferably 1% by mass, and still more preferably 5% by mass. Meanwhile, the upper limit of the content is preferably 50% by mass, more preferably 40% by mass, still more preferably 30% by mass, and particularly preferably 15% by mass. When the content of the ink agent for textile falls within the above range, the ink is enabled to have an appropriately adjusted viscosity.

### Binder Resin

The binder resin used for the ink of the present embodiment serves as a glue and thus facilitates fixation of the ink agent for textile on fibers constituting a woven fabric, thereby leading to a further improvement of the laundering fastness of the ink. As the binder resin, a water soluble synthetic resin is preferred, a water soluble phenol resin, a water soluble urethane resin, and a water soluble acrylic resin are more preferred, and a water soluble acrylic resin is still more preferred. As the water soluble acrylic resin, a water soluble styrene-acrylic acid copolymer may also be used. The aforementioned binder resins may be used either alone of one type, or in combination of two or more types thereof.

The lower limit of the content of the binder resin in the ink of the present embodiment is preferably 0.5% by mass, and more preferably 1.5% by mass. Meanwhile, the upper limit of the content of the binder resin is preferably 20% by mass, more preferably 10% by mass, and still more preferably 5% by mass. When the content of the binder resin falls within the above range, fixation of the ink agent for textile on fibers can be further facilitated.

### Liquid Medium

The liquid medium used for the ink of the present embodiment is not particularly limited, and is exemplified by water, a mixed solvent containing water and an organic solvent, and the like. The organic solvent may be used either alone of one type, or in combination of two or more types thereof.

### Water

Water to be used for the ink of the present embodiment is not particularly limited, and is preferably pure water. Pure water may be produced by, for example, ion exchange, distillation, and the like. Pure water that is sterilized by ultraviolet ray and the like is preferred.

### Organic Solvent

The organic solvent which may be used for the ink of the present embodiment is not particularly limited, and is preferably an alcohol in light of an appropriate adjustment of the viscosity, and odor suppression. An alcohol having a boiling point at one atmospheric pressure of no lower than 150 °C is more preferred. Such an alcohol is exemplified by a keto alcohol having a boiling point at one atmospheric pressure of no lower than 150 °C, a polyhydric alcohol having a boiling point at one atmospheric pressure of no lower than 150 °C, and the like.

Examples of the keto alcohol having a boiling point at one atmospheric pressure of no lower than 150 °C that may be used for the ink of the present embodiment include diacetone alcohol and the like.

Examples of the polyhydric alcohol having a boiling point at one atmospheric pressure of no lower than 150 °C that may be used for the ink of the present embodiment include: ethylene glycol polyhydric alcohols such as ethylene glycol, diethylene glycol, triethylene glycol and tetraethylene glycol; glycerin; propylene glycol; dipropylene glycol; tripropylene glycol; polyethylene glycols having a molecular weight of no greater than 2,000; 1,3-propylene glycol; isopropylene glycol; isobutylene glycol; 1,4-butanediol; 1,3-butanediol; 1,2-pentanediol; 1,5-pentanediol; 1,2-hexanediol; 1,6-hexanediol; 1,2,6-hexanetriol; 1,8-octanediol; 1,2-octanediol; mesoerythritol; pentaerythritol; 2-mercaptoethanol; and the like. As the polyhydric alcohol, the ethylene glycol polyhydric alcohols and glycerin are preferred, and diethylene glycol and glycerin are more preferred.

As the liquid medium, the mixed solvent containing water and the organic solvent is preferred, a mixed solvent containing water, a keto alcohol and a polyhydric alcohol is more preferred, and a mixed solvent containing water, diacetone alcohol, diethylene glycol and glycerin is still more preferred.

In the case in which the ink of the present embodiment contains the liquid medium, the lower limit of the content of the liquid medium in the ink is preferably 10% by mass, more preferably 20% by mass, and still more preferably 50% by mass. Meanwhile, the upper limit of the content of the liquid medium is preferably 95% by mass, and more preferably 80% by mass. When the content of the liquid medium falls within the above range, the ink is enabled to have a more appropriately adjusted viscosity.

In the case in which the ink of the present embodiment contains water, the lower limit of the content of water in the ink is not particularly limited, and is preferably 5% by mass and more preferably 10% by mass. Meanwhile, the upper limit of the content of water is not particularly limited, and is preferably 90% by mass, more preferably 85% by mass, still more preferably 80% by mass, particularly preferably 70% by mass, still particularly preferably 60% by mass, and most preferably 30% by mass. When the content of water falls within the above range, the ink is enabled to have a more appropriately adjusted viscosity.

In the case in which the ink of the present embodiment contains the keto alcohol, the lower limit of the content of the keto alcohol in the ink is not particularly limited, and is preferably 5% by mass and more preferably 20% by mass. Meanwhile, the upper limit of the content of the keto alcohol is not particularly limited, and is preferably 80% by mass, and more preferably 60% by mass. When the content of the keto alcohol falls within the above range, the ink is enabled to have a more appropriately adjusted viscosity.

In the case in which the ink of the present embodiment contains the polyhydric alcohol, the lower limit of the content of the polyhydric alcohol in the ink is not particularly limited, and is preferably 1% by mass and more preferably 5% by mass. Meanwhile, the upper limit of the content of the polyhydric alcohol is not particularly limited, and is preferably 40% by mass, and more preferably 20% by mass. When the content of the polyhydric alcohol falls within the above range, the ink is enabled to have a more appropriately adjusted viscosity.

### Additive

The ink of the present embodiment may further contain other additive in addition to the aforementioned components. The other additive is exemplified by a hydrotropic agent, alkylene glycol monoalkyl ether, a surfactant, a chelating agent, and the like.

The hydrotropic agent which may be used for the ink of the present embodiment breaks the hydrogen bond in the liquid medium and the like, resulting in an improvement of an affinity between the ink agent for textile and the liquid medium. Examples of the hydrotropic agent include urea, dimethylurea, thiourea, monomethylthiourea, dimethylthiourea, and the like. Of these, urea is preferred.

In the case in which the ink of the present embodiment contains the hydrotropic agent, the lower limit of the content of the hydrotropic agent in the ink is preferably 1% by mass and more preferably 5% by mass. Meanwhile, the upper limit of the content is preferably 40% by mass, and more preferably 25% by mass. When the content of the hydrotropic agent falls within the above range, a further improvement of the affinity between the ink agent for textile and the liquid medium is enabled.

The alkylene glycol monoalkyl ether and the surfactant improve stability of discharge of the ink of the present embodiment with an ink-jet printer, particularly with an ink-jet printer equipped with a piezo print head. The alkylene glycol monoalkyl ether is exemplified by triethylene glycol mono-n-butyl ether and the like. The surfactant is exemplified by an acetylene glycol surfactant and the like. The upper limit of the content of each of the alkylene glycol monoalkyl ether and the surfactant is not particularly limited, and is, for example, 20% by mass.

The antiseptic agent which may be used for the ink of the present embodiment is exemplified by Proxel CRL, Proxel BDN, Proxel GXL, Proxel XL2, Proxel IB and Proxel TN that are available from Avecia, and the like.

In the case in which the ink of the present embodiment contains the antiseptic agent, the lower limit of the content of the antiseptic agent in the ink is preferably 0.01% by mass, more preferably 0.1% by mass, and still more preferably 0.5% by mass. Meanwhile, the upper limit of the content of the antiseptic agent is preferably 1% by mass, more preferably 0.2% by mass, and still more preferably 0.5% by mass. When the content of the antiseptic agent falls within the above range, antiseptic properties are enabled to be sufficiently exerted without a decrease in the coloring properties and the like.

The chelating agent which may be used for the ink of the present embodiment traps metals in the ink to improve reliability of the ink, and traps heavy metals in a woven fabric to prevent uneven dyeing. As the chelating agent, ethylenediaminetetraacetate, nitrilotriacetate, hexametaphosphate, pyrophosphate and metaphosphate are preferred. As a commercially available chelating agent, "TRILON TA" and "DEKOL SN" available from BASF, and "Calgon T" available from Benkiesed are preferred. These commercially available chelating agents are highly biodegradable and capable of reducing environmental burden. The upper limit of the content of the chelating agent is not particularly limited, and is, for example, 5% by mass.

Production process of the ink of the present embodiment is not particularly limited, and the ink may be obtained by mixing the aforementioned components according to a well-known process.

### Textile Printing Method

A textile printing method in which the ink of the present embodiment is used is described hereinafter. The textile printing method includes a step of discharging droplets of the ink to attach the droplets onto a woven fabric (discharge step), and a step of heating the woven fabric obtained after the discharge step (heating step). It is preferred that the textile printing method further includes a step of subjecting the woven fabric to a pretreatment prior to the discharge step (pretreatment step). Due to using the ink of the present embodiment, the textile printing method can be employed without a washing process after the discharge step, and a resulting printed textile is superior in coloring properties and laundering fastness.

The woven fabric to be used for the textile printing method is not particularly limited, and is exemplified by a woven fabric formed from any of: natural fibers such as cotton, linen, wool and silk; synthetic fibers such as polyester, nylon and polyurethane; semisynthetic fibers such as an acetate fiber; and the like.

### Pretreatment Step

In this step, the woven fabric is subjected to a pretreatment in order to improve fixability of the ink agent for textile contained in the ink of the present embodiment to the woven fabric, and the like. A process for the pretreatment agent is exemplified by a process of applying a pretreatment agent to the woven fabric.

The pretreatment agent to be used may contain a hydrotropic agent, an aqueous metal salt, a pH adjusting agent, a pH buffer agent, an aqueous polymer, and the like. The pretreatment agent may further contain additives such as a water repellent agent, a surfactant, and the like.

Examples of the hydrotropic agent include urea, dimethylurea, thiourea, monomethylthiourea, dimethylthiourea, and the like.

Examples of the aqueous metal salt include alkali metal salts, alkaline earth metal salts, and the like.

Examples of the pH adjusting agent include acid ammonium salts such as ammonium sulfate and ammonium tartrate.

Examples of the aqueous polymer include:
natural aqueous polymers such as starches from maize, wheat, etc., cellulose polymers such as carboxy cellulose, methyl cellulose and hydroxyethyl cellulose, polysaccharide polymers such as sodium alginate, gum arabic, locust bean gum, tragacanth gum, guar gum and tamarind seed, proteins such as gelatin and casein, as well as tannin substances, and lignin substances; and
synthetic aqueous polymers such as a polyvinyl alcohol, a polyethylene oxide, an acrylic acid polymer, a maleic anhydride polymer, and the like.

### Discharge Step

In this step, droplets of the ink of the present embodiment are discharged and attached onto a woven fabric. As a process of discharging the droplets of the ink, an ink-jet process is preferred. An ink-jet printer used for the ink-jet process is not particularly limited, and any of commercially available ink-jet printers may be used.

### Heating Step

In this step, the woven fabric obtained after the discharge step is heated to remove volatiles, such as the liquid medium in the ink of the present embodiment. The heating temperature is, for example, no lower than 70 °C and no higher than 140 °C. The heating time period is, for example, no less than 30 sec and no greater than 20 min, and preferably no less than 30 sec and no greater than 5 min. When the heating temperature and the heating time period fall within the above ranges, inhibition of thermal decomposition of the ink agent for textile, and reliable removal of the volatiles are enabled simultaneously.

### EXAMPLES

Hereinafter, the present invention is explained in detail by way of Examples, but the present invention is not limited to these Examples.

### Average Diameter and Shapes of (A) Polymer Particles, and Proportion of Spherical Particles on Number Basis in (A) Polymer Particles

The average diameter of the polymer particles (A) used in the present embodiment means a value of a particle diameter at 50% cumulative volume from the smallest particle (D50), calculated based on measurement results of a particle size distribution of particles by using a particle size distribution analyzer employing a light scattering method as a principle of the measurement. As the particle size distribution analyzer, FPAR-1000 available from OTSUKA ELECTRONICS Co., LTD was used.

The shapes of the polymer particles (A) and the number-based proportion of the spherical particles were determined by visually observing the shapes of the particles by using a transmission electron microscope (H-7650 available from Hitachi High-Technologies Corporation) and calculating a proportion of the spherical particles in 100 particles being present in a viewing angle.

### Synthesis of (A) Polymer Particles

### Synthesis Example 1

According to Synthesis Example 1 in Japanese Unexamined Patent Application, Publication No. 2015-214682, a colored particle dispersion liquid was obtained. Specifically, 20.0 g of methyl methacrylate, 5.0 g of ethylene glycol dimethacrylate, and 6.5 g of a monomer (1) represented by the following formula were mixed to obtain a homogeneously mixed solution. To the mixed solution, 6.3 g of sodium dodecyl sulfonate and 56.9 g of ion exchanged water were added to prepare a monomer mixture liquid.

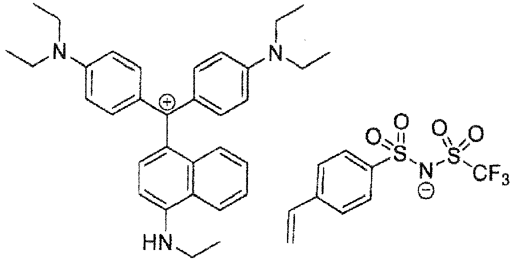

Separately, 0.6 g of sodium dodecyl sulfonate, 1.5 g of a 5 mass% aqueous solution of sodium persulfate, and 110.5 g of ion exchanged water were mixed to prepare a polymerization initiator solution. The polymerization initiator solution was heated to 80 °C under a nitrogen flow. To the polymerization initiator solution thus heated, the monomer mixture liquid was added dropwise over 3 hrs. After completion of the dropwise addition, the reaction liquid was kept at the internal temperature of 80 °C for 1 hour. Subsequently, an aqueous solution obtained by mixing 1.3 g of a 2 mass% aqueous solution of sodium persulfate and 0.5 g of ion exchanged water was added to the reaction liquid. The reaction liquid was further kept at 80 °C for 2 hrs, and then allowed to cool to room temperature. Thereafter, the reaction liquid was filtrated, and 11.5% ammonia water was added thereto so as to make the pH 8.2. A dispersion liquid (A-1) containing an ink for textile including the polymer particles (A) was thus obtained. It is to be noted that, among the polymer particles (A) in the dispersion liquid (A-1), no less than 90% was spherical particles on number basis. The solid content concentration of the dispersion liquid (A-1) was 30% by mass, and the average particle diameter of the polymer particle (A) in the dispersion liquid (A-1) obtained through observation using the transmission electron microscope was 250 nm.

### Synthesis Example 2

A homogeneously mixed solution was obtained by mixing 71.5 g of methyl methacrylate, 19.0 g of ethylene glycol dimethacrylate, 3.0 g of methacrylic acid, and 6.5 g of the monomer (1). The mixed solution was added to a container which had been charged with 19.1 g of a surfactant (LATEMUL E-118B available from Kao Corporation, concentration: 26% by mass), 2.7 g of a surfactant (RIKASURF M-30 available from New Japan Chemical Co., Ltd., concentration: 70% by mass) and 40.4 g of ion exchanged water, and then the mixture was stirred for 20 min to prepare a monomer mixture liquid.

Separately, 1.12 g of a surfactant (LATEMUL E-118B available from Kao Corporation, concentration: 26% by mass), 5.8 g of a 5 mass% aqueous solution of ammonium persulfate, and 157.7 g of ion exchanged water were mixed to prepare a polymerization initiator solution. The polymerization initiator solution was heated to 80 °C under a nitrogen flow. To the polymerization initiator solution thus heated, the monomer mixture liquid was added dropwise over 3 hrs. After completion of the dropwise addition, the reaction liquid was kept at the internal temperature of 80 °C for 1 hour. Subsequently, 7.14 g of a 1.4 mass% aqueous solution of ammonium persulfate was added to the reaction liquid. The reaction liquid was further kept at 80 °C for 2 hrs, and then allowed to cool to room temperature. Thereafter, the reaction liquid was filtrated, and 11.5% ammonia water was added thereto so as to make the pH 8.2. A dispersion liquid (A-2) containing an ink for textile including the polymer particles (A) was thus obtained. The solid content concentration of the dispersion liquid (A-2) was 30% by mass, and the average particle diameter of the polymer particle (A) was 105 nm.

### Synthesis Example 3

A dispersion liquid (A-3) was obtained by a similar process to Synthesis Example 2 except that the monomer mixture liquid was constituted of 70.0 g of methyl methacrylate, 17.0 g of ethylene glycol dimethacrylate, 3.0 g of methacrylic acid, and 10.0 g of the monomer (1). The solid content concentration of the dispersion liquid (A-3) was 30% by mass, and the average particle diameter of the polymer particle (A) was 108 nm.

### Synthesis Example 4

A dispersion liquid (A-4) was obtained by a similar process to Synthesis Example 3 except that a monomer (2) represented by the following formula was used in place of the monomer (1) as the monomer having the chromophore. The solid content concentration of the dispersion liquid (A-4) was 30% by mass, and the average particle diameter of the polymer particle (A) was 95 nm.

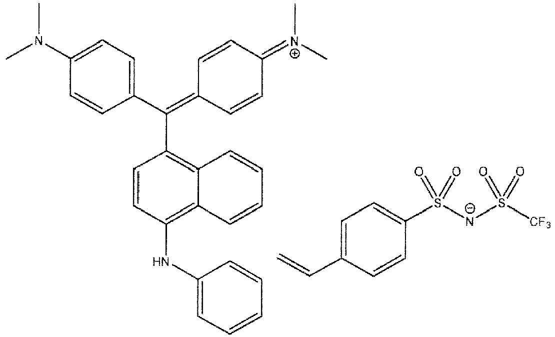

### Synthesis Example 5

A homogeneously mixed solution was obtained by mixing 61.0 g of methyl methacrylate, 16.0 g of ethylene glycol dimethacrylate, 3.0 g of methacrylic acid, and 20.0 g of a monomer (3) represented by the following formula. The mixed solution was added to a container which had been charged with 15.3 g of a surfactant (LATEMUL E-118B available from Kao Corporation, concentration: 26% by mass), 2.3 g of a surfactant (RIKASURF M-30 available from New Japan Chemical Co., Ltd., concentration: 70% by mass) and 46.2 g of ion exchanged water, and then the mixture was stirred for 20 min to prepare a monomer mixture liquid.

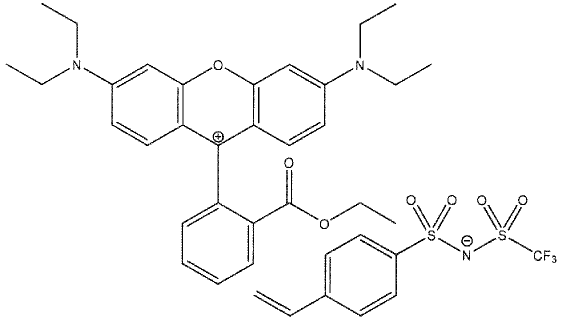

Separately, 6.1 g of a surfactant (LATEMUL E-118B available from Kao Corporation, concentration: 26% by mass), 4.8 g of a 5 mass% aqueous solution of ammonium persulfate, and 311.9 g of ion exchanged water were mixed to prepare a polymerization initiator solution. The polymerization initiator solution was heated to 80 °C under a nitrogen flow. To the polymerization initiator solution thus heated, the monomer mixture liquid was added dropwise over 3 hrs. After completion of the dropwise addition, the reaction liquid was kept at the internal temperature of 80 °C for 1 hour. Subsequently, 7.14 g of a 1.4 mass% aqueous solution of ammonium persulfate was added to the reaction liquid. The reaction liquid was further kept at 80 °C for 2 hrs, and then allowed to cool to room temperature. Thereafter, the reaction liquid was filtrated, and 11.5% ammonia water was added thereto so as to make the pH 8.2. A dispersion liquid (A-5) containing an ink for textile including the polymer particles (A) was thus obtained. The solid content concentration of the dispersion liquid (A-5) was 20% by mass, and the average particle diameter of the polymer particle (A) was 70 nm.

### Synthesis Example 6

A dispersion liquid (A-6) was obtained by a similar process to Synthesis Example 5 except that a monomer (4) represented by the following formula was used in place of the monomer (3) as the monomer having the chromophore. The solid content concentration of the dispersion liquid (A-6) was 20% by mass, and the average particle diameter of the polymer particle (A) was 72 nm.

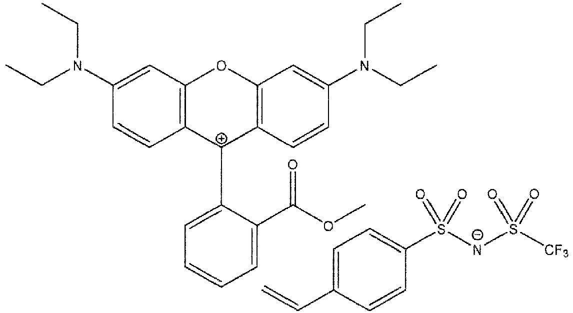

### Synthesis Example 7

A dispersion liquid (A-7) was obtained by a similar process to Synthesis Example 5 except that a monomer (5) represented by the following formula was used in place of the monomer (3) as the monomer having the chromophore. The solid content concentration of the dispersion liquid (A-7) was 20% by mass, and the average particle diameter of the polymer particle (A) was 69 nm.

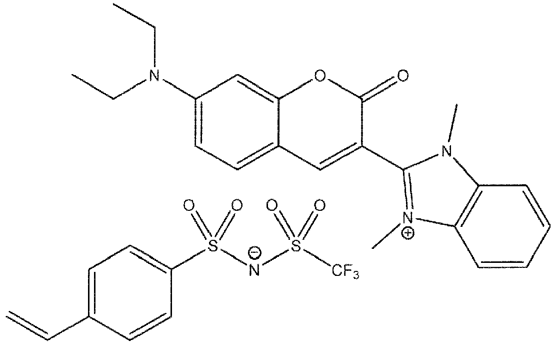

### Synthesis Example 8

A dispersion liquid (A-8) was obtained by a similar process to Synthesis Example 5 except that a monomer (6) represented by the following formula was used in place of the monomer (3) as the monomer having the chromophore. The solid content concentration of the dispersion liquid (A-8) was 20% by mass, and the average particle diameter of the polymer particle (A) was 69 nm.

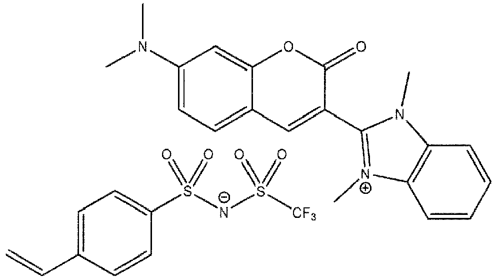

### Example 1

An ink (1-1) having the following constitution was prepared. It is to be noted that inks were prepared according to a well-known procedure (steps). In addition, in the ink (1-1), glycerin and diethylene glycol, and water (including water contained in the dispersion liquid (A-1)) corresponded to the liquid medium.
1) Dispersion liquid component: the dispersion liquid (A-1), 50% by mass
2) Hydrotropic agent: urea, 15% by mass
3) Polyhydric alcohol: glycerin, 5% by mass; and diethylene glycol, 10% by mass
4) Water soluble binder resin: a styrene-acrylic acid copolymer (Joncryl 61 available from BASF), 3% by mass
5) Antiseptic agent: Proxel XL2 available from Avecia, 0.1% by mass
6) Balance: water

A printed textile of Example 1 was obtained by: discharging droplets of the ink (1-1) by using an ink-jet printer onto a white silk cloth having been subjected to a pretreatment; drying at 80 °C for 5 min; and then keeping at 170 °C in heated vapor for 7 min. As the ink-jet printer, TX2-1600 available from Mimaki Engineering Co., Ltd. was used with a print density of 100%. In the pretreatment, the white silk cloth was immersed in a pretreatment agent (containing guar gum, ammonium sulfate, urea, and water at a ratio of 2 : 4 : 10 : 84) for 1 min. As the guar gum, NP8 available from SANSHO Co., Ltd. was used.

### Examples 2 to 8

Inks (A-2) to (A-8) were prepared in a similar manner to Example 1 except that the dispersion liquids (A-2) to (A-8) were used as the dispersion liquid component, and then printed textiles of Examples 2 to 8 were obtained by a textile printing method similar to that for Example 1.

### Comparative Example 1

An ink (1-9) was prepared with a similar constitution to Example 1 except that the dispersion liquid (A-1) was replaced with a 1.5% by mass water soluble dye "Basic Blue 7".

A printed textile of Comparative Example 1 was obtained by: discharging the ink (1-9) by using an ink-jet printer on a white silk cloth having been subjected to a pretreatment. The printed textile of Comparative Example 1 was produced in a plurality of number, and a part thereof was used for producing a printed textile of Comparative Example 2 described later. In Comparative Example 1, the ink-jet printer and the pretreatment process employed were similar to those in Example 1.

### Comparative Example 2

The printed textile of Comparative Example 1 was dried at 80 °C for 5 min; and then kept at 170 °C for 7 min in heated vapor. Thereafter, the printed textile was washed with water and then dried to obtain a printed textile of Comparative Example 2.

### Comparative Example 3

An ink (1-10) was prepared with a similar constitution to Comparative Example 1 except that "Basic Violet 11" was used as the water soluble dye. A printed textile of Comparative Example 3 was obtained by a textile printing method similar to that for Comparative Example 2 except that the ink (I-10) was used as the ink.

### Comparative Example 4

An ink (I-11) was prepared with a similar constitution to Comparative Example 1 except that "Basic Yellow 40" was used as the water soluble dye. A printed textile of Comparative Example 4 was obtained by a textile printing method similar to that for Comparative Example 2 except that the ink (1-11) was used as the ink.

### Evaluations

The printed textiles of Examples 1 to 8 and Comparative Examples 1 to 4 were washed with water and laundering fastness was determined. Specifically, water at 60 °C including each printed textile was stirred and then the printed textile was squeezed, and discharged water collected was observed for determination. The printed textiles of Examples 1 to 8 did not produce colored discharge water during the washing with water. On the other hand, the printed textiles of Comparative Examples 1 to 4 produced a large amount of colored discharge water during the washing with water. It is to be noted that evaluation of coloring properties for the printed textile of Comparative Example 1 failed due to loss of the dye having been washed out almost completely during the washing with water.

Next, the coloring properties were visually evaluated for the printed textiles of Examples 1 to 8 after the washing with water and for the printed textiles of Comparative Examples 1 to 4 prior to the washing with water. The printed textiles of Examples 1 to 8 after the washing with water were clean with no bleeding. Furthermore, the printed textiles of Examples 1 to 8 after the washing with water had extremely superior chroma saturation and color value, which were almost equivalent to those of Comparative Examples 1 to 4 prior to the washing with water.

As is clear from Examples, the ink of the present embodiment did not require a washing process for the textile printing and consequently enabled easy ink-jet textile printing, and therefore is determined to be superior in laundering fastness after the textile printing. On the other hand, as was revealed from Comparative Example 1, the ink containing the water soluble dye is determined to require heating and a washing process for the textile printing, in order to improve laundering fastness after the textile printing. In addition, as was revealed from Comparative Examples 2 to 4, the ink containing the water soluble dye is determined to exhibit insufficient laundering fastness after the textile printing, even when heating and the washing process were carried out for the textile printing. Furthermore, as was proven from Examples and Comparative Examples 1 to 4, use of the ink of the present embodiment is determined to enable obtaining a printed textile having coloring properties as superior as those in the case of using an ink containing the water soluble dye.

### INDUSTRIAL APPLICABILITY

The ink according to an embodiment of the present invention allows easy ink-jet textile printing and is superior in coloring properties and laundering fastness after the textile printing. In particular, the ink can be suitably used for the ink-jet textile printing. The textile printing method and the printed textile according to other embodiments of the present invention are able to easily provide a printed textile that is superior in the coloring properties and the laundering fastness. The ink agent for textile according to another embodiment of the present invention can be suitably used as a coloring component of the aforementioned ink.

## Claims

1. An ink comprising:
an ink agent comprising a polymer comprising a chromophore; and
a binder resin.

2. The ink according to claim 1, further comprising water.

3. The ink according to claim 1 or 2, further comprising an antiseptic agent.

4. The ink according to any one of claims 1 to 3, further comprising a hydrotropic agent.

5. The ink according to any one of claims 1 to 4, wherein the polymer is in a particulate form.

6. The ink according to claim 5, wherein an average diameter of particles of the polymer is no less than 10 nm and no greater than 1,000 nm.

7. The ink according to any one of claims 1 to 6, wherein the polymer comprises a first structural unit represented by formula (I): 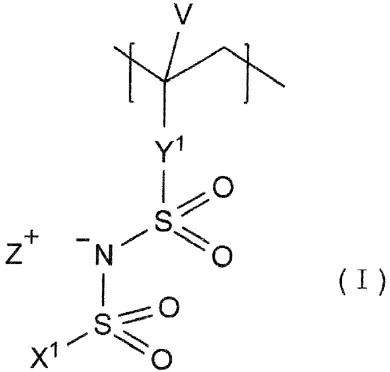 wherein in the formula (I),
V represents a hydrogen atom or a methyl group;
X¹ represents an alkyl group or a fluorinated alkyl group;
Y¹ represents a divalent hydrocarbon group; and
Z⁺ represents a cationic chromophore.

8. The ink according to claim 7, wherein the polymer further comprises a second structural unit comprising no chromophore.

9. The ink according to claim 8, wherein at least a part of the second structural unit forms a cross-linked structure.

10. The ink according to any one of claims 7 to 9, wherein X¹ in the formula (1) represents a perfluoroalkyl group.

11. The ink according to any one of claims 7 to 10, wherein Y¹ in the formula (1) represents an arylene group.

12. The ink according to any one of claims 7 to 11, wherein Z⁺ in the formula (I) is represented by formula (1): 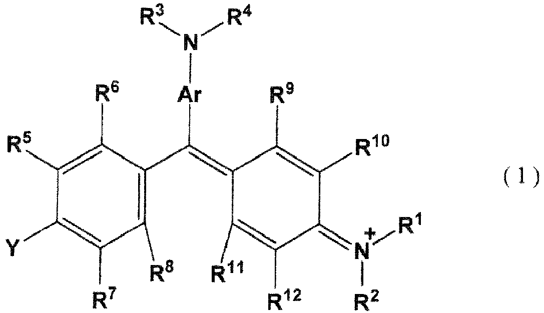 wherein in the formula (1),
Ar represents a substituted or unsubstituted divalent aromatic hydrocarbon group;
R¹ to R⁴ each independently represent a hydrogen atom, an alkyl group having 1 to 8 carbon atoms, a cycloalkyl group having 3 to 8 carbon atoms, or an aryl group having 3 to 8 carbon atoms;
R⁵ to R¹² each independently represent a hydrogen atom, a halogen atom, an alkyl group having 1 to 8 carbon atoms, or -COOR^{a};
R^{a} represents a hydrogen atom or an alkyl group having 1 to 8 carbon atoms; and
Y represents a hydrogen atom or a monovalent group represented by formula (2): 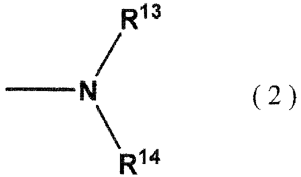
wherein in the formula (2), R¹³ and R¹⁴ each independently represent a hydrogen atom, an alkyl group having 1 to 8 carbon atoms, a cycloalkyl group having 3 to 8 carbon atoms, or an aryl group having 3 to 8 carbon atoms.

13. The ink according to any one of claims 7 to 11, wherein Z⁺ in the formula (I) is represented by formula (4): 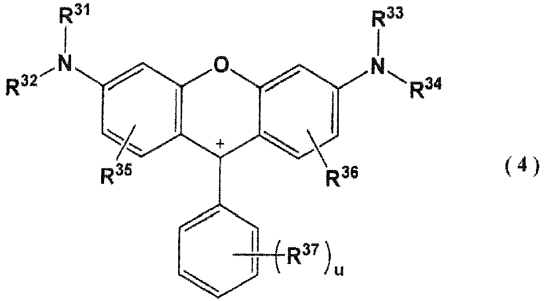 wherein in the formula (4),
R³¹, R³², R³³ and R³⁴ each independently represent a hydrogen atom, -R³⁸ or a monovalent aromatic hydrocarbon group having 6 to 10 carbon atoms, wherein the hydrogen atom comprised in the monovalent aromatic hydrocarbon group is optionally substituted with a halogen atom, -R³⁸, -OH, -OR³⁸, -SO₃H, -SO₃M¹, -COOH, -COOM¹, -COOR³⁸, -SO₃R³⁸, -SO₂NHR³⁹ or -SO₂NR³⁹R⁴⁰;
R³⁵ and R³⁶ each independently represent a hydrogen atom or an alkyl group having 1 to 8 carbon atoms;
R³⁷ represents -SO₃H, -SO₃M¹, -COOH, -COOR³⁸, -SO₃R³⁸, -SO₂NHR³⁹ or -SO₂NR³⁹R⁴⁰; and
u is an integer of 0 to 5, wherein in a case where u is an integer of no less than 2, a plurality of R³⁷s are identical or different,
wherein, R³⁸ represents a monovalent saturated hydrocarbon group having 1 to 10 carbon atoms, wherein the hydrogen atom comprised in the monovalent saturated hydrocarbon group is optionally substituted with a halogen atom, and the monovalent saturated hydrocarbon group optionally comprises -O-, -CO- or -NR^{38A}- between two carbon atoms in a C-C bond, wherein R^{38A} represents a monovalent saturated hydrocarbon group having 1 to 10 carbon atoms;
R³⁹ and R⁴⁰ each independently represent an alkyl group having 1 to 10 carbon atoms, a cycloalkyl group having 3 to 30 carbon atoms or -X^{a}, or R³⁹ and R⁴⁰ taken together represent a substituted or unsubstituted monovalent heterocyclic group having 1 to 10 carbon atoms together with an atom or an atomic chain to which R³⁹ and R⁴⁰ bond, wherein the hydrogen atom comprised in the alkyl group and in the cycloalkyl group is optionally substituted with a hydroxy group, a halogen atom, -X^{a}, -CH=CH₂ or -CH=CHR³⁸, the alkyl group and the cycloalkyl group optionally comprise -O-, -CO- or -NR³⁸- between two carbon atoms in a C-C bond, and the hydrogen atom comprised in the monovalent heterocyclic group is optionally substituted with -R³⁸, -OH or -X^{a};
M¹ represents a sodium atom or a potassium atom; and
X^{a} represents a monovalent aromatic hydrocarbon group having 6 to 10 carbon atoms or a monovalent aromatic heterocyclic group having 5 to 10 carbon atoms, wherein the hydrogen atom comprised in the monovalent aromatic hydrocarbon group and in the monovalent aromatic heterocyclic group is optionally substituted with -OH, -R³⁸, -OR³⁸, -NO₂, -CH=CH₂, -CH=CHR³⁸ or a halogen atom.

14. The ink according to any one of claims 7 to 11, wherein Z⁺ in the formula (I) is represented by formula (Y): 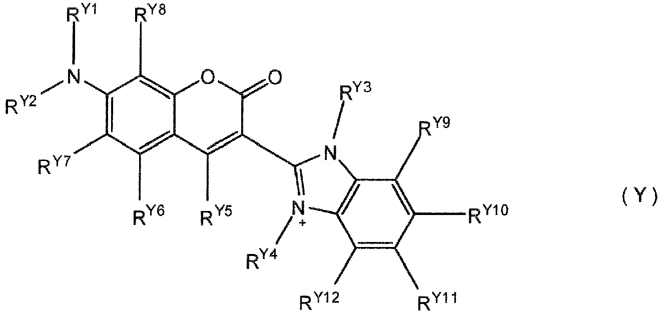 wherein in the formula (Y),
R^{Y1} to R^{Y4} each independently represent a hydrogen atom, an alkyl group having 1 to 8 carbon atoms, a cycloalkyl group having 3 to 8 carbon atoms, or an aryl group having 3 to 8 carbon atoms; and
R^{Y5} to R^{Y12} each independently represent a hydrogen atom, a halogen atom, an alkyl group having 1 to 8 carbon atoms, or -COOR^{Y}, wherein R^{Y} represents a hydrogen atom or an alkyl group having 1 to 8 carbon atoms.

15. The ink according to any one of claims 1 to 14, wherein the polymer is an emulsion polymer.

16. The ink according to any one of claims 1 to 15 that is to be used for textile.

17. A textile printing method comprising:
discharging droplets of the ink according to any one of claims 1 to 16 to attach the droplets onto a woven fabric; and
heating the woven fabric obtained after the discharging.

18. The textile printing method according to claim 17, further comprising subjecting the woven fabric to a pretreatment prior to the discharging.

19. The textile printing method according to claim 17 or 18, wherein in the discharging, the droplets of the ink are discharged by an ink-jet process.

20. A printed textile obtained by the textile printing method according to any one of claims 17 to 19.

21. An ink agent for textile comprising a polymer comprising a chromophore.

22. The ink agent for textile according to claim 21, wherein the polymer is in a particulate form.

23. The ink agent for textile according to claim 22, wherein an average diameter of particles of the polymer is no less than 10 nm and no greater than 1,000 nm.

24. The ink agent for textile according to any one of claims 21 to 23, wherein the polymer comprises a first structural unit represented by formula (I): 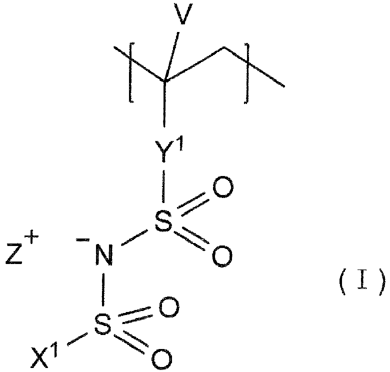 wherein in the formula (I),
V represents a hydrogen atom or a methyl group;
X¹ represents an alkyl group or a fluorinated alkyl group;
Y¹ represents a divalent hydrocarbon group; and
Z⁺ represents a cationic chromophore.

25. The ink agent for textile according to claim 24, wherein the polymer further comprises a second structural unit comprising no chromophore.

26. The ink agent for textile according to claim 25, wherein at least a part of the second structural unit forms a cross-linked structure.

27. The ink agent for textile according to any one of claims 24 to 26, wherein X¹ in the formula (1) represents a perfluoroalkyl group.

28. The ink agent for textile according to any one of claims 24 to 27, wherein Y¹ in the formula (1) represents an arylene group.

29. The ink agent for textile according to any one of claims 24 to 28, wherein Z⁺ in the formula (I) is represented by formula (1): 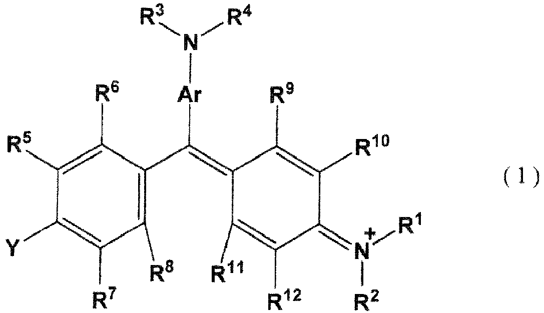 wherein in the formula (1),
Ar represents a substituted or unsubstituted divalent aromatic hydrocarbon group;
R¹ to R⁴ each independently represent a hydrogen atom, an alkyl group having 1 to 8 carbon atoms, a cycloalkyl group having 3 to 8 carbon atoms, or an aryl group having 3 to 8 carbon atoms;
R⁵ to R¹² each independently represent a hydrogen atom, a halogen atom, an alkyl group having 1 to 8 carbon atoms, or -COOR^{a};
R^{a} represents a hydrogen atom or an alkyl group having 1 to 8 carbon atoms; and
Y represents a hydrogen atom or a monovalent group represented by formula (2): 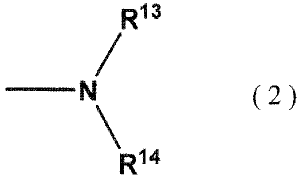
wherein in the formula (2),
R¹³ and R¹⁴ each independently represent a hydrogen atom, an alkyl group having 1 to 8 carbon atoms, a cycloalkyl group having 3 to 8 carbon atoms, or an aryl group having 3 to 8 carbon atoms.

30. The ink agent for textile according to any one of claims 24 to 28, wherein Z⁺ in the formula (I) is represented by formula (4): 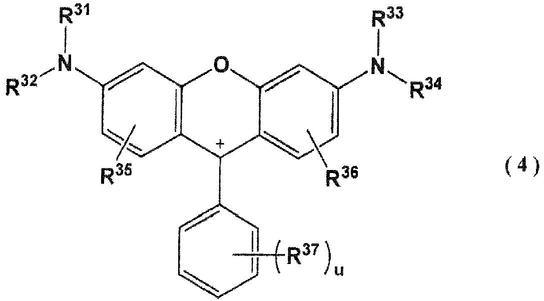 wherein in the formula (4),
R³¹, R³², R³³ and R³⁴ each independently represent a hydrogen atom, -R³⁸ or a monovalent aromatic hydrocarbon group having 6 to 10 carbon atoms, wherein the hydrogen atom comprised in the monovalent aromatic hydrocarbon group is optionally substituted with a halogen atom, -R³⁸, -OH, -OR³⁸, -SO₃H, -SO₃M¹, -COOH, -COOM¹, -COOR³⁸, -SO₃R³⁸, -SO₂NHR³⁹ or -SO₂NR³⁹R⁴⁰;
R³⁵ and R³⁶ each independently represent a hydrogen atom or an alkyl group having 1 to 8 carbon atoms;
R³⁷ represents -SO₃H, -SO₃M¹, -COOH, -COOR³⁸, -SO₃R³⁸, -SO₂NHR³⁹ or -SO₂NR³⁹R⁴⁰;
u is an integer of 0 to 5, wherein in a case where u is an integer of no less than 2, a plurality of R³⁷s are identical or different;
R³⁸ represents a monovalent saturated hydrocarbon group having 1 to 10 carbon atoms, wherein the hydrogen atom comprised in the monovalent saturated hydrocarbon group is optionally substituted with a halogen atom, and the monovalent saturated hydrocarbon group optionally comprises -O-, -CO- or -NR^{38A}- between two carbon atoms in a C-C bond, wherein R^{38A} represents a monovalent saturated hydrocarbon group having 1 to 10 carbon atoms;
R³⁹ and R⁴⁰ each independently represent an alkyl group having 1 to 10 carbon atoms, a cycloalkyl group having 3 to 30 carbon atoms or -X^{a}, or R³⁹ and R⁴⁰ taken together represent a substituted or unsubstituted monovalent heterocyclic group having 1 to 10 carbon atoms together with an atom or an atomic chain to which R³⁹ and R⁴⁰ bond, wherein the hydrogen atom comprised in the alkyl group and in the cycloalkyl group is optionally substituted with a hydroxy group, a halogen atom, -X^{a}, -CH=CH₂ or -CH=CHR³⁸, the alkyl group and the cycloalkyl group optionally comprise -O-, -CO- or -NR³⁸- between two carbon atoms in a C-C bond, and the hydrogen atom comprised in the monovalent heterocyclic group is optionally substituted with -R³⁸, -OH or -X^{a};
M¹ represents a sodium atom or a potassium atom; and
X^{a} represents a monovalent aromatic hydrocarbon group having 6 to 10 carbon atoms or a monovalent aromatic heterocyclic group having 5 to 10 carbon atoms, wherein the hydrogen atom comprised in the monovalent aromatic hydrocarbon group and in the monovalent aromatic heterocyclic group is optionally substituted with -OH, -R³⁸, -OR³⁸, -NO₂, -CH=CH₂, -CH=CHR³⁸ or a halogen atom.

31. The ink agent for textile according to any one of claims 24 to 28, wherein Z⁺ in the formula (I) is represented by formula (Y): 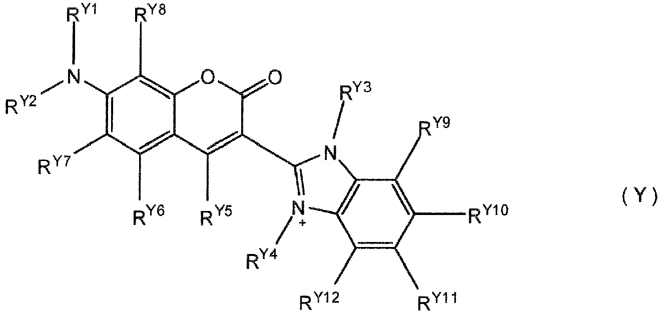 wherein in the formula (Y),
R^{Y1} to R^{Y4} each independently represent a hydrogen atom, an alkyl group having 1 to 8 carbon atoms, a cycloalkyl group having 3 to 8 carbon atoms, or an aryl group having 3 to 8 carbon atoms; and
R^{Y5} to R^{Y12} each independently represent a hydrogen atom, a halogen atom, an alkyl group having 1 to 8 carbon atoms, or -COOR^{Y}, wherein R^{Y} represents a hydrogen atom or an alkyl group having 1 to 8 carbon atoms.

32. The ink agent for textile according to any one of claims 21 to 31, wherein the polymer is an emulsion polymer.
